(19) Europäisches Patentamt
European Patent Office
Office européen des brevets

(11) **EP 2 619 151 B1**

(12) **EUROPÄISCHE PATENTSCHRIFT**

(45) Veröffentlichungstag und Bekanntmachung des Hinweises auf die Patenterteilung:
**14.02.2018 Patentblatt 2018/07**

(21) Anmeldenummer: **11767207.1**

(22) Anmeldetag: **21.09.2011**

(51) Int Cl.:
*C03B 5/24* (2006.01)     *F27B 3/28* (2006.01)
*G01B 11/28* (2006.01)     *G05D 23/22* (2006.01)

(86) Internationale Anmeldenummer:
**PCT/EP2011/066463**

(87) Internationale Veröffentlichungsnummer:
**WO 2012/038488 (29.03.2012 Gazette 2012/13)**

(54) **VERFAHREN ZUM GEREGELTEN BETRIEB EINES REGENERATIV BEHEIZTEN INDUSTRIEOFENS, STEUEREINRICHTUNG UND INDUSTRIEOFEN MIT STEUEREINRICHTUNG**

METHOD FOR THE CONTROLLED OPERATION OF AN INDUSTRIAL OVEN THAT IS HEATED IN A REGENERATIVE MANNER AND INDUSTRIAL OVEN WITH CONTROL DEVICE

PROCÉDÉ POUR FAIRE FONCTIONNER, DE MANIÈRE RÉGULÉE, UN FOUR INDUSTRIEL À CHAUFFAGE À RÉGÉNÉRATION, FOUR INDUSTRIEL AVEC DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2010 DE 102010041155**

(43) Veröffentlichungstag der Anmeldung:
**31.07.2013 Patentblatt 2013/31**

(73) Patentinhaber: **Software & Technologie Glas GmbH (STG)**
**03051 Cottbus-Kiekebusch (DE)**

(72) Erfinder:
• **HEMMANN, Peter**
**03050 Cottbus (DE)**
• **BIRLE, Andreas**
**03044 Cottbus (DE)**

• **SCHULZ, Thomas**
**03159 Döbern (DE)**
• **HEELEMANN, Helmut**
**03050 Cottbus (DE)**

(74) Vertreter: **Eisenführ Speiser**
**Patentanwälte Rechtsanwälte PartGmbB**
**Anna-Louisa-Karsch-Strasse 2**
**10178 Berlin (DE)**

(56) Entgegenhaltungen:
WO-A1-02/48057     DD-A1- 204 533
FR-A- 1 260 888     GB-A- 1 188 256
GB-A- 2 115 142     SU-A1- 620 433
SU-A1- 743 965     SU-A1- 1 481 214
US-A- 2 069 542     US-A- 3 028 095

## Beschreibung

Die Erfindung betrifft ein Verfahren zum geregelten Betrieb eines regenerativ beheizten Industrieofens, insbesondere mit einer Schmelzwanne, insbesondere für Glas, nach dem Oberbegriff des Anspruchs 1. Die Erfindung betrifft auch einen Industrieofen nach dem Oberbegriff des Anspruchs 15.

## Stand der Technik

Grundsätzlich ist ein Industrieofen nicht auf die Verwendung in der Glasherstellung beschränkt. Z. B. kann ein Industrieofen der eingangs genannten Art kann auch in der Metallherstellung od. dgl. eingesetzt werden. Ein regenerativer Industrieofen der eingangs genannten Art hat sich jedoch als besonders geeignet in der Glasherstellung zum Schmelzen von Glas erwiesen.

So offenbart GB 1,188,256 ein Verfahren zum geregelten Betrieb eines regenerativ beheizten Industrieofens mit einer Temperaturregelung wobei eine Steuerung für einen Zyklus der Feuerperioden der Brenner vorgesehen ist. Beispielsweise kann eine Steuerung abhängig von den Temperaturen in den Regeneratoren Steuersignale vorgeben, wenn eine Temperatur oder eine Temperaturdifferenz einen vorbestimmten Wert erreicht hat.

FR 1,260,888 offenbart ein Verfahren zum Betrieb eines regenerativen Industrieofens, bei dem es zum Beispiel nach einer Störung es eine einseitige Erhöhung der Temperatur der von Regeneratorkammern geben kann, wobei zum Beispiel eine der Temperaturen noch um eine zulässige Differenz noch höher als die der anderen ist. Die heißesten Regeneratorkammern werden dann nur für die minimale Zeitdauer geladen, zum Beispiel 6 Minuten, während die Kammern vor dem Kühler durch das Rauchgas für einen Zeitraum gleich der maximalen Dauer (zum Beispiel 15 Minuten) durchquert werden. Als ein Ergebnis nach einigen periodischen Wechseln werden die Regeneratorkammern symmetrisch bei gleichen Temperaturen geladen.

Bislang wird die Steuerung regenerativer Glasschmelzöfen -d. h. regelmäßig mittels Steuerung über den Oberofen im Ofenraum als Regelstrecke- ausschließlich PID-Reglern anvertraut, welche die Regelung einer Oberofentemperatur zum Ziel haben und deren Ausgang entweder eine Brennstoffmenge selbst darstellt oder eine Verbrennungsluftmenge, der die Brennstoffmenge dann in einstellbarem Verhältnis folgt.

Problematisch dabei ist, dass sich in der Tat solche Temperaturregler --wie bei einem Verfahren der DD 143 158 A1-- regelmäßig als ungeeignet erweisen, die Temperatur eines regenerativen Glasschmelzofens erfolgreich und stabil zu regeln und insofern ungenutzt bleiben. Der Grund liegt im bislang verfolgten Regelungsentwurf, dem die systematische Tendenz innewohnt, geringfügige Temperaturunterschiede zwischen den Regeneratoren immer weiter zu vergrößern. Dabei wird auch der Brennstoffeinsatz zwischen den Feuerseiten immer weiter vergrößert, ohne dass jemals ein Sollwert der Ofentemperatur erreichbar wäre; d. h. die Regelung konvergiert nicht auf den Sollwert einer Ofentemperatur.

Aus DE 36 10 365 A1 ist ein Verfahren zur technologisch geführten Regelung einer Oberofenheizung eines Industrieofens bekannt, bei dem ein Brennstoffstrom zur Regelung einer Gewölbetemperatur des Oberofens vorgesehen ist und das Problem einer regenerativen Seitenunsymmetrie subjektiven Einflüssen überlassen ist. Es wurde gefunden, dass Temperaturunterschiede in den Ofentemperaturen zwischen linksseitiger und rechtsseitiger Beheizung in überwiegendem Masse in entsprechenden Temperaturunterschieden der zugehörigen Regeneratoren ihre Ursache haben. In Einzelfällen können Kopftemperaturen des linken Regenerators um 45 °C niedriger als die des rechten Regenerators sein und gleichzeitig die Temperaturen im Ofenraum, d. h. regelmäßig im Oberofen, bei linksseitiger Beheizung um 20 °C niedriger als dieselben Temperaturen bei rechtsseitiger Beheizung sein.

WO 02/48057 A1 beschreibt ein Verfahren zur Messung und einfach- sowie feststrukturierten Regelung von qualitätsbestimmenden Parametern eines Glasbades, bei dem die Gemengebedeckung, die Gemengezusammendrängung, die Lage der thermischen Schwerpunkte von Wärmesenken und -quellen der Glasbadoberfläche und der Flammen optisch vermessen werden. Insbesondere eine Gemengebedeckung wird als Sollwert in einer nachfolgenden Regelung verglichen und durch Brennstoffbeaufschlagung, Brennstoffverteilung, Brennervordruck, Leistung der Zusatzheizung oder Bubbling-Durchsatz eingestellt. Dazu wird in einem Ofenraum-Bildausschnitt einer Ofenraumkamera, der in Realproportionen umbewertet ist, bildpunktweise nach Farbwichtung Gemenge oder Glas unterschieden. An der Spitze der Regelhierarchie regelt ein Regelkreis den Gemengebedeckungsgrad. Grundsätzlich vorteilhaft nutzt dieses Verfahren den Gemengebedeckungsgrad als Hinweis auf die sich ausbildende Flächeninanspruchnahme von Schmelzgut auf der Schmelzoberfläche und dies als Indikator für die tatsächliche aktuelle Wärmeübertragung bei einer bestimmten Schmelzleistung. Es hat sich jedoch gezeigt, dass die derart bestimmte Gemengebedeckung in noch verbesserter Weise bestimmbar ist. Beispielsweise ist die dort vorgeschlagene Vorgehensweise einer Analyse anfällig für driftende Bildhelligkeit und kann hinsichtlich ihrer Spezifizität noch verbessert werden.

Wünschenswert ist eine technologisches Steuerungskonzept, das im wesentlichen auf einen Sollwert der Ofentemperatur konvergiert und insbesondere das Problem der Seitenunsymmetrie regelungstechnisch behebt.

## Aufgabe

An dieser Stelle setzt die Erfindung an, deren Aufgabe es ist, ein verbessertes Verfahren zum geregelten Betrieb eines regenerativ beheizten Industrieofens, insbesondere mit einer Schmelzwanne, insbesondere für Glas, sowie einen verbesserten regenerativ beheizten Industrieofen anzugeben.

## Erfindung

Betreffend das Verfahren wird die Aufgabe durch die Erfindung mit einem Verfahren der eingangs genannten Art gelöst, bei dem erfindungsgemäß die Merkmale des kennzeichnenden Teils des Anspruchs 1 vorgesehen sind. Die Erfindung führt zur Lösung der Aufgabe auf einen Industrieofen nach Anspruch 15.

Unter Brennstoff ist insbesondere Brenngas zu verstehen. Andere Brennstoffe wie Öl, z. B. Heizöl, oder dergleichen sind ebenfalls zum Betrieb eines Industrieofens möglich. Auch Gemische aus Brenngas und Brennöl sind möglich. Unter einem Injektor ist insbesondere eine Eindüseeinrichtung zu verstehen, die ausgebildet ist, Brennstoff unmittelbar vor einem Ofenraum in einer Zuführstrecke oder im Ofenraum einzudüsen, insbesondere getrennt von Verbrennungsluft. Eine Vermischung von Verbrennungsluft und Brennstoff ist erst im Ofenraum vorgesehen. Der Ofenraum weist insbesondere einen Oberofen und einen Unterofen auf. Ein Unterofen weist insbesondere eine Glasschmelzwanne oder dergleichen auf.

Die Bezeichnungen der Regeneratoren als linker und rechter Regenerator sind nicht einschränkend hinsichtlich der Ortsanordnung derselben zu verstehen und folgen dem allgemeinen technischen Sprachgebrauch. Die Bezeichnungen können auch anders gewählt werden, z. B. als erster und zweiter Regenerator. Die Regeneratoren können in Bezug auf eine Glasschmelzwanne in Flussrichtung oder quer zur Flussrichtung des Glases angeordnet sein.

Ein einziger Regenerator kann einer Anzahl von Injektoren zugeordnet sein. Unter einem Regenerator kann auch ein Regeneratorabschnitt oder dergleichen zu verstehen sein, der einem einzelnen Injektor zugeordnet ist.

Die erste und zweite Regelschleife sind zunächst unabhängig voneinander ausführbar und können so unabhängig auf die Regelstrecke wirken. In einer Weiterbildung können die erste und zweite Regelschleife auch gekoppelt sein; z.B. über den Temperaturregler oder den Symmetrieregler.

Das Konzept der Erfindung baut auf verfügbare Oberofentemperaturegelverfahren auf. Über ein dem ersten Regler zugeordnetes Stellglied wird eine erste stellbare Stellgröße in Form eines Brennstoffstroms und/oder eines Verbrennungsluftstroms eingestellt. Es versteht sich, dass bei geregelter Einstellung primär nur des Brennstoffstroms eine Verbrennungsluft mitgeführt wird, insbesondere unterstöchiometrisch. Es versteht sich, dass bei geregelter Einstellung primär nur der Verbrennungsluft ein Brennstoffstrom mitgeführt wird, insbesondere unterstöchiometrisch. Es können grundsätzlich auch zwei Stellgrößen in Form eines Brennstoffstroms und eines Verbrennungsluftstrom, insbesondere mittels zwei Stellgliedern, geregelt eingestellt werden; dies ggfs. unter einer Randbedingung eines z. B. unterstöchiometrischen Betriebs.

Einfach formuliert sind vorliegend insbesondere ein Verfahren und Vorrichtungen zur Regelung der Oberofentemperatur regenerativ beheizter Glasschmelzöfen vorgesehen, wobei zusätzlich zur Temperaturregelung eine automatische Regelung der thermischen Symmetrie der Regeneratoren vorgesehen ist. Deren Ausgang kann in einer besonders bevorzugten Weiterbildung z. B. die Periodenzeiten zwischen linksseitiger und rechtsseitiger Beheizung aktiv beeinflussen.

Die Erfindung geht von der Überlegung aus, dass üblicherweise ein destabilisierender Wirkungszusammenhang zwischen dem linken und rechten Regenerator besteht. Dieser lässt sich wie folgt beispielhaft verdeutlichen: Ein z. B. durch Zufall geringfügig kälterer linker Regenerator liefert dem Ofen geringfügig weniger Wärme der vorgewärmten Verbrennungsluft - ein einfacher PID-Regler antwortet darauf mit Erhöhung der linksseitigen Brennstoff- und Verbrennungsluftmenge mit dem Ergebnis, dass eine größere Abgasmenge in den rechten Regenerator eintritt und diesen stärker aufheizt als zuvor. Nach Feuerwechsel -d.h. gewechselter Befeuerung für den Industrieofen vom rechten Regenerator aus- liefert demzufolge der rechte nun heißere Regenerator mehr Wärme mit der vorgewärmten Verbrennungsluft in den Ofen. Darauf vermindert der PID-Ofentemperaturregler die Brennstoffmenge für die rechtsseitige Befeuerung und die zugehörige Verbrennungsluftmenge und damit wird auch weniger Abgas in den linken Regenerator gesendet, der infolgedessen weiter an Temperatur verliert. Die Fortsetzung der Regelschleife mit erneut gewechselter Befeuerung für den Industrieofen wieder vom linken Regenerator aus mündet in einen destabilisierenden Kreislauf, der nur durch gesetzte Ober- oder Untergrenzen für die Brennstoffmenge der Feuerseiten aufgehalten wird. Dies ist unzureichend, da es letztlich zu einer dauerhaft unsymmetrischen Befeuerung eines Industrieofens führt.

Die Erfindung hat erkannt, dass ohne Herstellung der thermischen Symmetrie der Regeneratoren eine stabile und symmetrische Regelung der Oberofentemperaturen nicht möglich ist. Insbesondere hat die Erfindung zur Lösung der Aufgabe erkannt, dass die Temperaturregelung des Oberofens gemäß dem ersten Regelkreis um eine automatische Symmetrieregelung zu ergänzen ist, die vorliegend mittels dem zweiten Regelkreis aufgebaut ist. Als Sollwert wird ein geeignetes Kriterium zur Bewertung der thermischen Symmetrie der Regeneratoren verwendet, das im Prozess als Unterschied zwischen der ersten und zweiten Vorwärmekenngröße definierbar ist. Als Ausgang der zweiten Regelschleife wird ein Wärmeübertrag zwischen dem ersten und zweiten Regenerator eingestellt. Das Konzept der Erfindung gemäß dem Anspruch 1 sieht im Ergebnis einen Energieausgleich zwischen den Regeneratoren vor, der jederzeit in der zweiten Regelschleife nachgeregelt werden kann. Grundsätzlich kann dies geschehen, ohne die Brennstoff- und Verbrennungsluftmengen der Ofenheizung gemäß der ersten Regelschleife zu beeinflussen. Insbesondere hat es sich als vorteilhaft erwiesen, für den Betrieb der zweiten Regelschleife die erste Regelschleife unabhängig weiterzuführen oder aber dort erreichte Werte für einen Durchlauf der zweiten Regelschleife zunächst festzuhalten.

Ein Wärmeinhalt der Verbrennungsluft ist regelmäßig nicht unmittelbar bekannt. Der Wärmeinhalt kann aber indirekt gemessen oder aus geeigneten Kenngrößen eines Regenerators und/oder Ofenraumes hergeleitet werden; dazu können Kenngrößen wie Temperaturen oder Luftmengen herangezogen werden. Die Kenngrößen können gemessen, simuliert oder gerechnet sein; sie können auch auf Erfahrungswerten beruhen oder Kennlinien entnommen sein. Unter einer Vorwärmekenngröße gemäß dem Konzept der Erfindung ist grundsätzlich jede Kenngröße zu verstehen, mittels der ein Maß für den Wärmeinhalt der Verbrennungsluft angebbar ist; jedenfalls insofern angebbar ist, als dass sich eine Vergleichsgröße für einen Wärmeinhalt der Verbrennungsluft im ersten Regenerator und für einen Wärmeinhalt der Verbrennungsluft im zweiten Regenerator angeben lässt. Gemäß dem Konzept der Erfindung wird als Sollwert ein geeignetes Kriterium zur Bewertung der thermischen Symmetrie der Regeneratoren verwendet, das im Prozess als Unterschied zwischen der ersten und zweiten Vorwärmekenngröße definierbar ist. Das Kriterium eignet sich zur Bewertung, wie viel Wärme von einem ersten Regenerator zu einem zweiten Regenerator zu übertragen ist, um eine Symmetrie zwischen diesen herzustellen. Im Rahmen einer Weiterbildung kann beispielsweise vorgesehen sein, dass als Kriterium für die Symmetrie der Regeneratoren die tatsächliche Temperatur der vorgewärmten Verbrennungsluft mittels kontinuierlicher Absaugemessung laufend aktuell bestimmt wird und aus dem Produkt des Ergebnisses dieser Messung mit der tatsächlichen Verbrennungsluftmenge die Wärme aus vorgewärmter Verbrennungsluft aktuell berechnet wird, die bei linksseitiger und bei rechtsseitiger Befeuerung dem Ofenraum zugeführt wird.

Unter einer Wärmeübertragungsgröße ist ein Parameter zu verstehen mittels dem eine Wärmemenge von einem ersten auf einen zweiten Regenerator übertragbar ist. Insbesondere ist dies insofern ein Parameter, der einen Wärmetransportmechanismus zwischen dem ersten und zweiten Regenerator --über den Ofenraum aber (in der Bilanz) ohne direkte Beeinflussung desselben-- beeinflusst, d.h. der nur einen Wärmetransportmechanismus zwischen zwei über den Ofenraum beabstandeten Regeneratoren beeinflusst, ohne den Wärmeinhalt des Ofenraums selbst direkt zu beeinflussen. Neben den in den Weiterbildungen bevorzugt genannten Wärmeübertragungsgrößen, die allein oder in Kombination realisierbar sind, kann grundsätzlich auch eine andere Wärmeübertragungsgröße genutzt werden, mittels der eine Wärmemenge von einem ersten auf einen zweiten Regenerator übertragbar ist. Möglichst sollte eine Übertagung direkt und mit möglichst wenigen Verlusten sowie unter Wahrung der Prozessstabilität erfolgen.

In einer besonders bevorzugten Weiterbildung des Verfahrens wird als Wärmeübertragungsgröße eine erste Zeitspanne eingestellt, um welche für den heißeren des ersten und zweiten Regenerators die erste Periodendauer (also die Periodendauer eines Wärmeeintrags in den Ofenraum aus einem Regenerator über vorgewärmte Verbrennungsluft) verlängert und/oder für den kälteren des ersten und zweiten Regenerators die erste Periodendauer verkürzt wird. Bevorzugt kann auch als Wärmeübertragungsgröße eine zweite Zeitspanne eingestellt werden, um welche für den kälteren des ersten und zweiten Regenerators die zweite Periodendauer (also die Periodendauer eines Wärmeaustrags aus dem Ofenraum in einen Regenerator über heißes Abgas) verlängert und/oder für den heißeren des ersten und zweiten Regenerators die zweite Periodendauer verkürzt wird. Vorzugsweise haben die erste und zweite Zeitspanne den gleichen Betrag, d. h. auch für eine verkürzte oder verlängerte Periodendauer ist eine Wärmeaustragszeit an einem linken Regenerator gleich einer Wärmeeintragszeit an einem rechten Regenerator und umgekehrt. Grundsätzlich kann bei Bedarf jedoch auch eine erste und zweite Zeitspanne unterschiedlich sein. Anders formuliert ist vorteilhaft als Stellgröße eine Wärmeübertragungsgröße vorgesehen, die in einer besonders bevorzugten Ausführungsform als eine erste Zeitspanne gebildet ist, um welche die Periodendauer der regenerativen Beheizung auf der Seite des heißeren Regenerators verlängert wird, um mehr Wärme von diesem zum kälteren Regenerator zu transportieren, während umgekehrt die Periodendauer des kälteren Regenerators um eine erste Zeitspanne mit vorzugsweise demselben Betrag verringert wird, um seinen Bestandsaufbau an gespeicherter Wärme zu unterstützen. Besonders bevorzugt ist der Ausgang des Symmetriereglers als eine Zeitspanne gebildet, um welche die Periodendauer der Beheizung auf der Seite des kälteren Regenerators verkürzt wird und/oder um die die Periodendauer auf der Seite des heißeren Regenerators verlängert wird. Dabei soll erreicht werden, dass Wärme aus dem heißeren Regenerator in den kälteren Regenerator transportiert wird, während möglichst vermieden ist, dass sich ein kälterer Regenerator zu Lasten des Ofenraums erwärmt.

Mit anderen Worten führt das Konzept der Erfindung in einer bevorzugten Weiterbildung auf ein Verfahren zur Regelung der Oberofentemperatur regenerativ beheizter Glasschmelzöfen, bei dem ein an sich bekannter Temperaturregler, z. B. PID-Regler, zur Regelung einer repräsentativen Oberofentemperatur einen Ausgang für eine Brennstoffenergie aufweist und verknüpft wird mit einem zweiten Regler, der die thermische Symmetrie zwischen den Regeneratoren laufend aktiv so korrigiert, dass beide Regeneratoren die gleiche Wärme aus vorgewärmter Verbrennungsluft in den Ofenraum liefern. Erst mit einer so hergestellten thermischen Symmetrie der Regeneratoren wird die Temperaturregelung des Oberofens überhaupt möglich, was von der Erfindung erkannt wurde.

**Weiterbildungen**

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Bevorzugt wird die zweite stellbare Stellgröße in Form einer den Wärmeübertrag zwischen dem ersten und zweiten Regenerator beeinflussenden Wärmeübertragungsgröße eingestellt, um den Unterschied zwischen der ersten und zweiten Vorwärmekenngröße auf einen Schwellwert nahe Null zu beschränken. Vorteilhaft werden die Zeitbeträge am Ausgang der Symmetrieregelung eng begrenzt, um einen allmählichen Transport der Wärme zu ermöglichen, möglichst ohne nennenswerte Beeinflussung des gesamten Ofenprozesses. Wird z. B. die zulässige Zeitverschiebung über die oben genannte Zeitspanne am Ausgang des Symmetriereglers auf 30 Sekunden begrenzt, dann kann der Temperaturausgleich zwischen den Regeneratoren bei erstmaliger Aktivierung und vorliegender Unsymmetrie mehrere Tage bis zu einer Woche in Anspruch nehmen und kommt danach bei sonst symmetrischen Voraussetzungen wieder auf Werte um Null herum zurück.

Vorteilhaft kann der Unterschied zwischen der ersten und zweiten Vorwärmekenngröße als Reglergebnis der zweiten Regelschleife zur Bewertung des Zustandes des Regenerators und/oder zur Bewertung einer weiteren Einflussgrößen verwendet werden, insbesondere zur Bewertung eines unkontrollierten Lufteinbruchs im Ofenraum und/oder Regenerator. Mit Vorteil versehen ist es so möglich das Reglergebnis des Symmetriereglers zur technologischen Bewertung des Zustandes des Regenerators oder zur Bewertung eventueller Unsymmetrie weiterer externer Einflussgrößen zu verwenden, z. B. zur Bewertung und Entscheidung, ob unkontrollierter Lufteinbruch in den Ofenraum oder aber in den Regenerator stattgefunden hat. Stellt sich nämlich gemäß der Erkenntnis der Weiterbildung mit auf Symmetrie geregelten Regeneratortemperaturen eine dauerhafte Schieflage der Periodenzeiten als notwendig ein, um die Symmetrie aufrecht zu erhalten, so ist auf diese Weise eine indirekte Messung gewonnen, die einen Hinweis gibt auf einen anderen einseitigen Einfluss, z. B. einen einseitigen Einbruch unkontrollierter Falschluft in den Ofenraum oder in den Regenerator oder auf einen unsymmetrischen Verschleißzustand der Regeneratoren.

In einer besonders bevorzugten Weiterbildung ist die Vorwärmekenngröße als Wärme aus vorgewärmter Verbrennungsluft gebildet, wobei die Wärme aus vorgewärmter Verbrennungsluft vorteilhaft aus einer Modellberechnung des Regenerators gewonnen wird. Als Kriterium zur Bewertung der thermischen Symmetrie der Regeneratoren ist damit im Idealfall die Wärme der vorgewärmten Verbrennungsluft heranzuziehen, ausgedrückt als Energiestrom in (MW), der aus dem Regenerator in den Ofenraum eintritt. Dieser Energiestrom steht regelmäßig nicht als Messwert zur Verfügung. Vorteilhaft kann dieser vorliegend durch ein mathematisches Modell des Regenerators geliefert werden. So kann beispielsweise als Kriterium für die Symmetrie der Regeneratoren ein mathematisches Modell in der Ofensteuerung genutzt werden, das die Wärme aus vorgewärmter Verbrennungsluft als Prozessgröße aktuell berechnet, die bei linksseitiger und rechtsseitiger Befeuerung dem Ofenraum zugeführt wird. Dieses mathematische Modell kann z. B. in eine Software der Steuereinrichtung für die Ofensteuerung eingebettet sein und sich durch eine einmalige Grundanpassung und selbstlernende Justierung an Vorgaben durch reale Messwerte von vorhandenen Thermoelemente am Regeneratorkopf und am Regeneratorfuß annähern und angenähert bleiben. Ein solches Modell liefert vorteilhaft die Ein- und Ausgangsströme an Wärmeenergie in einen ersten und zweiten Regenerator und aus denselben heraus sowie darüberhinaus jeweils die dem Ofen zur Verfügung gestellte Wärme. Die Modellrechnung ist vorteilhaft in Echtzeit in einer Steuereinrichtung ausführbar. Diese kann bevorzugt - in Anbetracht der vergleichsweise langsamen Temperaturdynamik des Industrieofens - auch genutzt werden, um in Echtzeit das dynamische Verhalten von Luft- und/oder Abgasströmen sowie dem damit verbundenen Temperaturverhalten sowie Wärmeeinträge und Wärmeausträge im voraus zu berechnen.

In einer zusätzlichen Maßnahme kann im Rahmen einer Weiterbildung die Vorwärmekenngröße als Produkt aus einer Verbrennungsluftmenge und einer Regeneratorkopftemperatur gebildet sein, wobei die Verbrennungsluftmenge und/oder Regeneratorkopftemperatur vorteilhaft gemessen ist. Insbesondere wird als Regeneratorkopftemperatur eine niedrigste Regeneratorkopftemperatur genutzt. Mit anderen Worten kann vereinfachend als Kriterium für die Symmetrie der Regeneratoren insbesondere das Produkt aus Verbrennungsluftmenge und niedrigster Kammerkopftemperatur am Ende eines jeweiligen Luft- und Befeuerungsperiode genutzt werden. Zwar kann dies gegenüber einer Modellberechnung ungenauer sein, da erfahrungsgemäß die wirkliche Temperatur der vorgewärmten Verbrennungslufttemperatur typisch etwa 50..100 °C unter der niedrigsten Thermoelementetemperatur im Regeneratorkopf liegen, denn das Thermoelement zeigt immer eine Mischtemperatur aus der Steintemperatur und der Lufttemperatur. Zum einen kann dies jedoch als Korrektur berücksichtigt werden und zum anderen hat sich die genannte Weiterbildung als vorteilhaft erwiesen, wenn eine Rechenkapazität einer Ofensteuerung nicht ausreichend ist. Dann kann als vereinfachtes Kriterium für die thermische Symmetrie der Regeneratoren das Produkt aus Verbrennungsluftmenge und niedrigster Regeneratorkopftemperatur am Ende der jeweiligen Luft- und Befeuerungsperiode herangezogen werden.

Vorteilhaft ist die Vorwärmekenngröße als Mittel aus wenigstens einer Regeneratorkopftemperatur und/oder Ofenraumtemperatur gebildet, insbesondere jeweils am Ende einer ersten Periodendauer und/oder einer zweiten Periodendauer, insbesondere als gewichtetes Mittel aus einem höchsten und einem niedrigsten Wert derselben. Insbesondere kann als Kriterium für die Symmetrie der Regeneratoren vereinfachend ein gewichtetes Mittel aus den höchsten und niedrigsten Regeneratorkopftemperaturen und den zugehörigen Oberofentemperaturen jeweils am Ende von Abgasperiode und Luftperiode genutzt werden. Dies erhöht vorteilhaft die Verlässlichkeit der gemessenen Werte in Bezug auf die tatsächlichen Temperaturwerte. Der Ofenraum und/oder ein Regenerator ist bevorzugt mit einer Anzahl von Temperatursensoren, insbesondere Thermoelementen versehen, um insbesondere eine Oberofentemperatur und/oder Regeneratorkopftemperatur zu erfassen.

Zur Beurteilung der thermischen Symmetrie der Regeneratoren kann insbesondere ein gewichtetes Mittel der oberen und unteren Temperaturspitzen von Thermoelementen aller sonstigen Temperatursensoren am Regeneratorkopf als allereinfachstes Kriterium verwendet werden, insbesondere jeweils erfasst am Periodenende und/oder vorteilhaft geglättet durch Mittelung über mehrere Perioden. Obgleich dies im Vergleich zu einer Modellrechnung ungenau sein kann, ist vor allem für den Fall unterschiedlicher Verbrennungsluftmengen auf den Feuerseiten selbst mit dieser vereinfachten Methode eine deutliche Verbesserung gegenüber einem ungeregelten Zustand erreicht. Insbesondere ist die Regelbarkeit des Oberofens für eine Temperaturregelung überhaupt erreichbar.

Insbesondere kann eine repräsentative Ofenraum- oder Oberofentemperatur als gewichtetes Mittel verschiedener Temperaturmessungen gebildet werden. Besonders vorteilhaft wird eine Ofenraumtemperatur als gewichtetes Mittel einer Anzahl ortsunterschiedlicher Temperaturmessungen gebildet. Vorteilhaft wird das Mittel als Grundlage einer vorteilhaften Extrapolation einer Ofenraum- oder Oberofentemperatur genutzt.

Im Rahmen einer besonders bevorzugten Weiterbildung wird eine Extrapolation einer Ofenraumtemperatur, insbesondere Oberofentemperatur, auf eine entsprechende Ofentemperatur am Ende der ersten und/oder zweiten Periodendauer vorgenommen, insbesondere auf Grundlage eines modellierten zeitlichen Verlaufes einer repräsentativen Ofenraumtemperatur, speziell Oberofentemperatur. Besonders bevorzugt erfolgt eine Extrapolation einer Ofenraumtemperatur auf eine Ofenraumtemperatur am Ende einer jeden Periodendauer. Bei einer Entnahme von Verbrennungsluft aus einem Regenerator innerhalb einer ersten Periodendauer sollte ja dessen Temperatur sinken während die im Ofenraum steigen sollte; anschließend bei einer Aufnahme von Abgas in denselben Regenerator innerhalb einer zweiten Periodendauer sollte ja dessen Temperatur steigen während die im Ofenraum weiter steigen sollte. Ein Verlauf der Ofenraumtemperatur während jeder der genannten Perioden lässt sich zum Ende der Periodendauer extrapolieren. So wird z. B. aus der Analyse des typischen zeitlichen Verlaufes der repräsentativen Oberofentemperatur jederzeit eine Vorhersage auf den Sollwert dieser Temperatur am jeweiligen Ende einer Feuerperiode der regenerativen Heizung --jeweils von der linken und der rechten Seite-- gebildet, die anstelle des aktuellen Temperaturwertes eben diese Vorhersagetemperatur den Sollwert des Temperaturreglers bildet. Vorteilhaft werden von der Ofensteuerung zu Beginn und Ende jedes wechselbedingten Temperaturabfalls die oberen und unteren Spitzentemperaturen erfasst und daraus unter Zugrundelegung dieses einfachen Modells des Temperaturverlaufes zu jeder Zeit eine Vorhersage auf die Periodenendtemperatur bereitgestellt.

Die Weiterbildung hat erkannt, dass ein Temperaturabfall nach Wechsel des Regenerators durch den Temperaturregler nicht ausgeglichen werden kann, da dieser Temperaturabfall im Gegenteil nur wie eine Störung der Messwerterfassung wirken würde; folgerichtig von der Weiterbildung also aus dem Regler ausgefiltert wird. Um eine unerwünschte Reaktion des Temperaturreglers auf den Temperaturabfall nach Umsteuerung zu verhindern, wird folglich anstelle des aktuellen Sollwertes der Ofentemperatur die Vorhersage der Temperatur auf das Periodenende als Reglereingang für den Temperaturregler verwendet. Lange bevor die wirkliche Temperatur den Periodenendwert tatsächlich erreicht, kann der Temperaturregler an der Vorhersage auf das Periodenende erkennen, ob die Temperatur zu schnell oder zu langsam steigt und kann sehr viel früher beginnen, regelungstechnisch einzugreifen.

Vorzugsweise wird nach einem durch die periodisch abwechselnde Führung bedingten Temperaturabfall in der ersten Regelschleife über ein dem ersten Regler zugeordnetes Stellglied eine erste stellbare Stellgröße in Form eines Brennstoffstroms und/oder eines Verbrennungsluftstroms eingestellt und dazu ein zusätzlicher Aufschlag derselben dem Ofen zugeführt. Insbesondere wird der Aufschlag aus dem Betrag des wechselbedingten Brennstoffausfalls und/oder aus einer Geschwindigkeit der Temperaturzunahme nach abgewechselter Führung gebildet. Dies führt zur beschleunigten Anhebung der Ofentemperaturen nach dem wechselbedingten Temperaturabfall. Vorzugsweise wird konkret auf die Brennstoffenergie als Reglerausgang des Temperaturreglers ein zusätzlicher Aufschlag auf die Brennstoffenergie dem Ofen zugeführt, wobei dieser Aufschlag selbst zuvor nicht Ergebnis der Temperaturregelung gewesen ist, sondern aus dem Betrag des wechselbedingten Brennstoffausfalls und aus der Geschwindigkeit der Temperaturzunahme nach Umsteuerung gebildet wird.

Im Rahmen einer besonders bevorzugten alternativen oder zusätzlichen Weiterbildung ist vorgesehen, dass als Wärmeübertragungsgröße eine Erhöhung des Verbrennungsluftstroms oder einem anderen Fluid durch den heißeren Regenerator bewirkt wird, insbesondere unabhängig von einer Änderung des Brennstoffstroms. Vorzugsweise bewirkt dazu der Ausgang des Symmetriereglers eine Erhöhung des Stromes an Verbrennungsluft oder einem anderen Fluid durch den heißeren Regenerator mit dem Ziel, zusätzlich Wärme aus diesem heißeren Regenerator zu entnehmen, unabhängig davon, ob die Brennstoffmenge dazu im gleichen Sinne geändert wird oder nicht. Es wird im Ergebnis vorteilhaft eine Erhöhung des Wärmetransportmediums erreicht. Die vorzugsweise Nutzung des anderen Fluids umfasst insbesondere eine Erhöhung des Stromes an einem anderen Inertgas, d.h. einem Gas, das nicht die Verbrennung des Brennstoffs fördert. Dies kann beispielsweise ein Gas wie $N_2$ oder $CO_2$ sein. Ein Inertgas hat den Vorteil, dass es den Wärmetransport von einem linken zu einem rechten Regenerator unterstützt, den Verbrennungsprozess und damit den Wärmeinhalt im Ofeninnenraum aber weitgehend unbeeinflusst lässt.

Im Rahmen einer besonders bevorzugten alternativen oder zusätzlichen Weiterbildung ist vorgesehen, dass als Wärmeübertragungsgröße eine Minderung des Verbrennungsluftstroms oder einem anderen Fluid durch den kälteren Regenerator bewirkt wird, insbesondere unabhängig von einer Änderung des Brennstoffstroms Vorzugsweise bewirkt dazu der Ausgang des Symmetriereglers eine Minderung des Stromes an Verbrennungsluft oder einem anderen Fluid durch den kälteren Regenerator, mit dem Ziel, weniger Wärme aus diesem kälteren Regenerator zu entnehmen, unabhängig davon, ob die Brennstoffmenge dazu im gleichen Sinne geändert wird oder nicht. Es wird im Ergebnis vorteilhaft eine Minderung des Wärmetransportmediums erreicht.

Unter dem Wärmetransportmedium ist insbesondere die Verbrennungsluft oder Abgas zu verstehen, z. B. in einem Rezirkulationskreislauf. Es kann darüber hinaus auch ein drittes Medium als Wärmetransportmedium genutzt werden, z. B. ein zusätzlich zugefügte Menge an Sauerstoff, Stickstoff oder sonstiges Inertgas.

In einer besonders bevorzugten Weiterbildung wird das Konzept der Erfindung ergänzt durch eine vorteilhafte Erkennung von Objekten auf der Schmelzoberfläche von Schmelzgut in der Schmelzwanne in einem bildgebenden Verfahren, beispielsweise unter Nutzung eines Ofenraumbildes, z. B. eines Videobilds, einer Ofenraumkamera. Insbesondere lassen sich dadurch Schmelzgutinseln von anderen Objekten auf dem Ofenraumbild unterscheiden und somit lässt sich die Flächeninanspruchnahme durch die Schmelzgutinseln genauer bestimmen; ein Gemengebedeckungsgrad ist damit bereinigt von Fehlern, die durch Bedeckungen anderer Objekte verursacht sind. Besonders bevorzugt kann die Gemengebedeckung ermittelt werden durch zyklische Analyse eines Ofenraumbildsignals (z.B. Videosignals) einer Ofenraumkamera, wobei die Gemengeinseln auf der Schmelzgutoberfläche aus dem Ofenraumbild durch Objektanalyse herausgefiltert werden. Diese können insbesondere von anderen Bildobjekten durch ihre charakteristische Form, ihre charakteristische Helligkeit und/oder durch die Lageveränderung ihres optischen Schwerpunktes in aufeinanderfolgenden Videobildern klassifiziert werden.

Im Rahmen dieser Weiterbildung führt das Konzept der Erfindung in besonders bevorzugter Weise zu einer Temperaturregelung in Kombination mit einer Symmetrieregelung, wobei zusätzlich eine akzeptabel konstante Flächeninanspruchnahme durch das Schmelzgut erreichbar wird und die tatsächliche Flächeninanspruchnahme durch das Schmelzgut als genauere Gemengebedeckung bestimmt ist. Bevorzugt wird dazu eine kombinierte Regelgröße aus einer Ofenraumtemperatur als erste Regelgröße und einer Schmelzgutbedeckung als zweite Regelgröße bestimmt. Besonders bevorzugt führt diese Weiterbildung auf eine Temperaturregelung, die mit einer Überwachung und Regelung eines Schmelzgutbedeckungsgrades an ungeschmolzenem Schmelzgut auf der Schmelzoberfläche verknüpft ist. Vorzugsweise lässt sich dabei der Fall behinderter Wärmeübertragung an das Schmelzgut, z.B. durch Schaum, durch zusätzlich aktivierte Regelalgorithmen berücksichtigen, um die Schmelzgutbedeckung zu verringern.

In einer besonders bevorzugten Weiterbildung kann der erste Regler auf eine gewichtete Differenz zweier Regelabweichungen, nämlich eine gewichtete Differenz einer Regelabweichung zwischen Soll- und Ist-Temperatur und einer Regelabweichung zwischen Soll- und Ist-Gemengebedeckung regeln. Letzteres heißt, dass Soll- und Ist-Wert einer Flächeninanspruchnahme durch das Schmelzgut mitbestimmend ist für die Stellgröße in Form eines Brennstoffstroms und/oder eines Verbrennungsluftstroms; das Stellglied für eine erste stellbare Stellgröße in Form eines Brennstoffstroms und/oder eines Verbrennungsluftstroms lässt sich in verbesserter Weise einstellen. Insbesondere kann dazu vorgesehen sein, dass eine Regelabweichung des PID-Reglers gebildet wird aus der gewichteten Differenz einerseits einer Regelabweichung einer Solltemperatur minus eines aktuellen Prozesswerts einer repräsentativen Ofentemperatur und minus andererseits einer Regelabweichung eines Sollwerts der Gemengebedeckung der Schmelzfläche mit ungeschmolzenem Schmelzgut minus dem zugehörigen Istwert.

Es lässt sich bevorzugt auch ein weiteres Stellglied für eine stellbare Hilfs-Stellgrößen abhängig von dem Ergebnis des weitergebildeten Reglers, insbesondere der gewichteten Differenz der zwei Regelabweichungen einstellen. Als Hilfs-Stellgröße kann beispielsweise eine Bubbling-Intensität, eine elektrische Zusatzheizung oder ein durch kurzzeitige Perioden reduzierendes Feuers oder eine Natrium-Anreicherung vorgesehen sein.

Anders ausgedrückt kann z.B. der Spezialfall behinderter Wärmeübertragung identifiziert werden durch eine zu hohe Ofentemperatur --sichtbar an einer negativen Regelabweichung (dT)-- bei einer zugleich zu hohen Gemengebedeckung --sichtbar an einer negativen Regelabweichung (dG). In diesem Falle kann der modifizierte (z.B. PID-) Regler aktiviert werden, der abgängig von der kombinierten Regelabweichung --insbesondere zusätzlich der negativen Regelabweichung (dT) und negativen Regelabweichung (dG)-am Ausgang wahlweise die Bubblingleistung oder die Leistung einer elektrischen Zusatzheizung im Glasbad oder ein reduzierendes Feuer darstellt. Ein durch kurzzeitige Perioden reduzierendes Feuers umfasst insbesondere die Maßnahme, dass ein Verhältnis von Brennstoff zur Verbrennungsluft kurzzeitig periodisch, insbesondere gepulst, gesenkt wird. Mittels einer verhältnismäßigen Reduzierung der Verbrennungsluft oder einer verhältnismäßigen Erhöhung des Brennstoffs kann eine kurzzeitige Sauerstoffverknappung herbeigeführt werden. Dies kann derart erfolgen, dass Rußpartikel bei der Verbrennung erzeugt werden; Rußpartikel beschränken die Schaumbildung.

Eine Natriumanreicherung kann beispielsweise durch die Zugabe von Natrium-Oxid oder einer anderen geeigneten Natrium-Verbindung erfolgen; dies senkt eine Oberflächenspannung und damit die Schaumbildung.

Ausführungsbeispiele der Erfindung werden nun nachfolgend anhand der Zeichnung beschrieben. Diese soll die Ausführungsbeispiele nicht nur notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf dem einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

Fig. 1 eine schematische Darstellung eines regenerativ beheizten Industrieofens mit einem linken und einem rechten Regenerator gemäß einer besonders bevorzugten Ausführungsform, bei der eine Steuereinrichtung mit einem Temperaturregelmodul und einem Symmetrieregelmodul gemäß dem Konzept der Erfindung vorgesehen ist;

Fig. 2 eine schematische Darstellung einer ersten Regelschleife für eine Temperaturregelung des Temperaturregelmoduls und einer zweiten Regelschleife für eine Symmetrieregelung des Symmetrieregelmoduls bei der Steuereinrichtung der Fig. 1 gemäß dem Konzept der Erfindung;

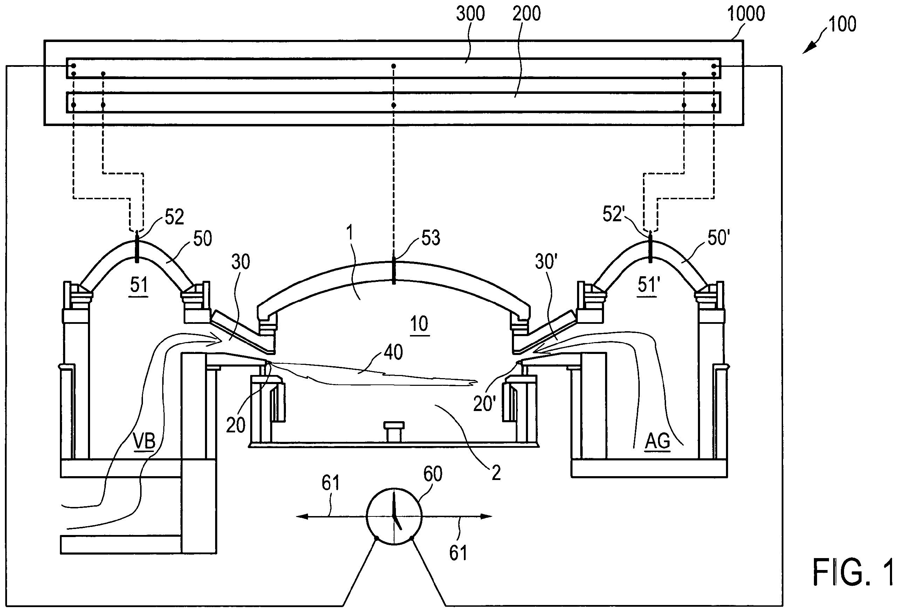

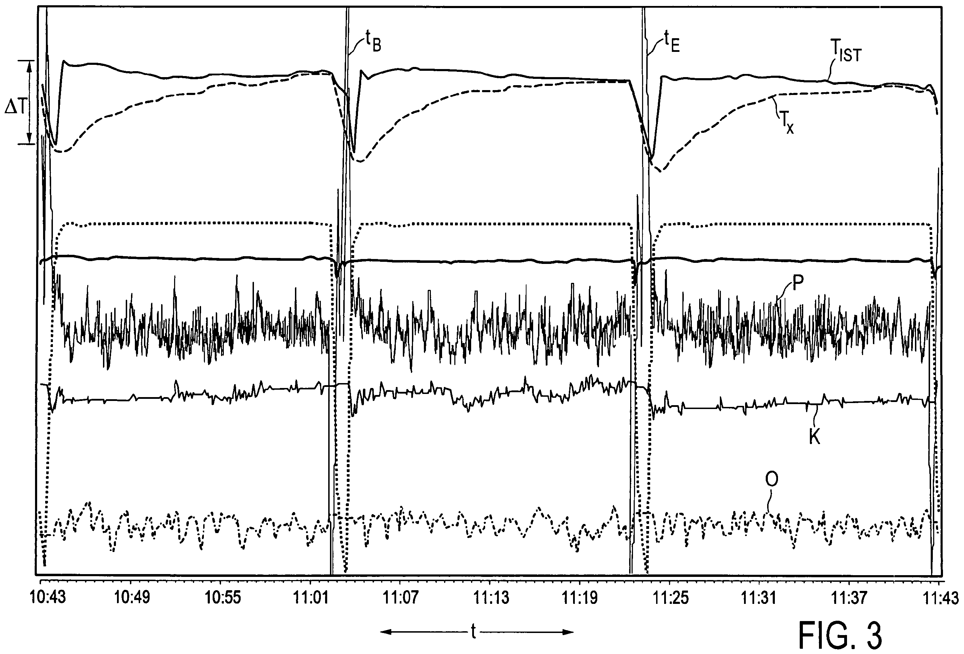

Fig. 3 eine beispielhafte Darstellung eines zeitlichen Verlaufs einer gemessenen Temperatur in einem Regeneratorkopf bei einem Industrieofen der Fig. 1 zusammen mit einem modulierten zeitlichen Verlauf einer repräsentativen niedrigsten Regeneratorkopftemperatur und dazu gehöriger extrapolierter Regeneratorkopftemperatur am Ende einer Periodendauer - dies in Darstellung zusammen mit einem Ofendruck, einer Klappenstellung für Verbrennungsluft sowie einem Sauerstoffanteil des Abgases und einer den symmetrisch eingeschwungenen Zustand des Systems darstellenden ausnivellierten Höhe eines Energieeintrags aus linkem und rechtem Regenerator am Ausgang des Temperaturreglers;

Fig. 4 den zeitlichen Verlauf eines Unterschieds der ersten und zweiten Vorwärmekenngröße in Form jeweils einer Wärme aus vorgewärmter Verbrennungsluft im weitgehend eingeschwungenen symmetrischen Zustand des Systems aus linkem und rechtem Regenerator zusammen mit einer eingestellten Zeitspanne als Wärmeübertragungsgröße gemäß der für den kälteren Regenerator eine Periodendauer zur Abführung von Abgas aus dem Ofenraum verlängert und/oder für den heißeren Regenerator eine Periodendauer zur Abführung von Abgas aus dem Ofenraum verkürzt ist;

Fig. 5 eine schematische Darstellung einer abgewandelten Symmetrieregelung des Symmetrieregelmoduls bei der Steuereinrichtung der Fig. 1, die gemäß dem Konzept der besonders bevorzugten Weiterbildung modifiziert ist, indem der Temperaturregler $R_T$ ersetzt ist durch einen kombinierten Regler $R_{TG}$ zur Berücksichtigung einer gewichteten Differenz der Regelabweichung dT einer Temperatur als auch der Regelabweichung dG einer Schmelzgutbedeckung;

Fig. 6 ein beispielhaftes Ofenraumbild einer Ofenraumkamera in unbearbeiteter Form;

Fig. 7 ein mittels einer Objekterkennung bearbeitetes Ofenraumbild ähnlich dem der Fig. 5, wobei Bubbling-Flecken erkannt und kenntlich gemacht sind;

Fig. 8 ein im Rahmen einer Objekterkennung bearbeitetes Ofenraumbild der Fig. 6 unter Darstellung unterschiedlicher Objekte, wie sie auf der Schmelzoberfläche mittels einer digitalen Filterung des Ofenraumbildes zur Objekterkennung identifiziert sind;

Fig. 9 das Bild der Fig. 8, wobei Schaumstrukturen der in Fig. 8 ersichtlichen Objekte hervorgehoben sind.

Fig. 1 zeigt in vereinfachter Darstellung einen regenerativ beheizten Industrieofen 100 mit einem Ofenraum 10, dessen Oberofenraum 1 als Regelstrecke geregelt wird und bei dem der Unterofenraum 2 eine nicht näher dargestellte Glasschmelzwanne aufweist. In der Glasschmelzwanne enthaltenes Glas wird über den Ofenraum 10 über die Schmelztemperatur erwärmt und zur Herstellung von Flachglas oder dergleichen aufgeschmolzen und geeignet behandelt. Der Industrieofen 100 wird vorliegend erwärmt, indem über mehrere seitlich angebrachte Brennstoffinjektoren 20 Brennstoff, vorliegend in Form von Brenngas, in den Oberofen 1 injiziert wird. Von den Brennstoffinjektoren 20 ist vorliegend ein linker Injektor 20 dargestellt. Von weiteren Brennstoffinjektoren 20' ist vorliegend ein rechter Injektor 20' dargestellt. Der Einfachheit halber sind im folgenden für gleiche oder ähnliche Teile oder solche mit gleicher oder ähnlicher Funktion gleiche Bezugszeichen verwendet. Beispielsweise können linksseitig bzw. rechtsseitig jeweils eine Anzahl von sechs Injektoren 20, 20' vorgesehen sein. In der in Fig. 1 gezeigten Befeuerungsperiode wird über einen Brennstoffinjektor 20 Brenngas in den Oberofen 1 praktisch ohne Verbrennungsluft injiziert. Oberhalb des Brennstoffinjektors 20 wird vorgewärmte Verbrennungsluft VB über eine linksseitige Öffnung 30 dem Oberofen 1 zugeführt. Die Verbrennungsluft aus der Öffnung 30 vermischt sich im Oberofen 1 mit dem vom Brennstoffinjektor 20 injizierten Brenngas und führt zur Ausbildung einer den Unterofen überdeckenden Flamme 40, die vorliegend symbolisch dargestellt ist. Das Bild der Fig. 1 zeigt den Industrieofen 100 im Zustand einer regenerativen Befeuerung über den linken Regenerator 50 und die linken Injektoren 20. Diese und die Öffnung 30 ist derart gestaltet, dass das über die Injektoren 20 gelieferte Brenngas in ausreichendem nah- oder unter stöchiometrischen Bereich mit Verbrennungsluft des linken Regenerators im Oberofen 1 vermischt wird. Der in Fig. 1 dargestellte Betriebszustand einer linksseitigen Befeuerung des Oberofens 1 unter Injektion von Brenngas über die linksseitigen Injektoren 20 und Zufuhr von Verbrennungsluft VB über den linken Regenerator 50 dauert für eine erste Periodendauer an von z.B. 20 bis 40 min. an. Während dieser ersten Periodendauer wird Verbrennungsluft VB zum Oberofen 1 im Ofenraum 10 separat vom Brenngas 20 zugeführt. Während der ersten Periodendauer wird Abgas AG aus dem Oberofen 1 über rechtsseitige Öffnungen 30' dem rechten Regenerator 50' zugeführt und heizt diesen auf.

In einem zweiten Betriebszustand wird für eine zweite Periodendauer ähnlicher zeitlicher Länge die Befeuerung des Oberofens 1 umgekehrt. Dazu wird dann Verbrennungsluft VB über den rechten Regenerator 50' dem Oberofen 1 zusammen mit Brenngas aus den rechten Injektoren 20' zugeführt, wobei die Verbrennungsluft VB dann die vom Abgas AG in der ersten Periodendauer im Regenerator 50' deponierte Wärme aufnimmt.

Die Regelung eines Brennstoffstroms und/oder eines Verbrennungsluftstroms erfolgt grundsätzlich über ein Temperaturregelmodul 200 einer Steuereinrichtung 1000 für den Industrieofen 100. Grundsätzlich kann dazu ein PID-Regler im Temperaturregelmodul 200 eingesetzt werden, gemäß dem unter Erhöhung des Brennstoffstroms und/oder des Verbrennungsluftstroms eine Ofenraumtemperatur erhöht bzw. unter Erniedrigung eines Brennstoffstroms und/oder eines Verbrennungsluftstroms eine Ofenraumtemperatur erniedrigt wird. Dem Temperaturregelmodul 200 werden Temperaturwerte des Regeneratorkopfes 51 bzw. 51' oder des Oberofenraumes 1 über geeignete Temperatursonden 52, 52', 53 zugeführt, die vorliegend jedenfalls zum Teil auch mit einer geeigneten Lambdasonde zur Messung eines Brennstoff-Luft-Verhältnisses kombiniert sind. Insbesondere die über die Temperatursonde 53 gemessene Temperatur im Oberofen dient als Eingang des Temperaturregelmoduls 200, z. B. um darauf basierend eine Temperaturmittelung und eine Extrapolation des Temperaturverhaltens auf das Ende einer Periodendauer vorzunehmen.

Insbesondere die Temperatursonden 52, 52', und vorliegend auch die Temperatursonde 53 liefern gemessene Temperaturen an den Eingang eines Symmetrieregelmoduls 300. Insbesondere die Temperaturen an einem Regeneratorkopf wie von den Temperatursonden 52, 52' gemessen, können als Grundlage einer beanspruchten vereinfachten Ermittlung einer Vorwärmekenngröße dienen. Auch die gegebenenfalls an gleicher Stelle angeordneten Lambda-Sonden oder andere Messfühler können Messwerte, z. B. über Luft- oder Abgasmengen, für eine solche vereinfachte Ermittlung liefern.

Die Steuereinrichtung 1000 weist darüberhinaus ein Symmetrieregelmodul 300 auf, das dem Konzept der Erfindung vorliegend ausgebildet ist, den Wärmeübertrag zwischen dem ersten und zweiten Regenerator 50, 50' zu beeinflussen. Vorliegend erfolgt dies über eine Wärmeübertragungsgröße in Form einer Zeitspanne $\pm\Delta t$, um welche für den kälteren des ersten und zweiten Regenerators 50, 50' die zweite Periodendauer t verlängert und/oder für den heißeren des ersten und zweiten Regenerators 50, 50' die zweite Periodendauer t verkürzt wird oder auch für den kälteren des ersten und zweiten Regenerators 50, 50' die erste Periodendauer t verkürzt und/oder für den heißeren des ersten und zweiten Regenerators 50, 50' die erste Periodendauer t verlängert wird. Ein geeignetes Stellglied in Form eines Zeitgebers 60 ist vorliegend mit dem Symmetrieregelmodul 300 gekoppelt und in der Lage, die erste und zweite Periodendauer t je nach Maßgabe des Symmetrieregelmoduls 300 zu verkürzen bzw. zu verlängern - letzteres ist durch die die Periodendauer um die Zeitspanne $\pm \Delta t$ beim linken Regenerator 50 bzw. rechten Regenerator 50' verschiebende Pfeile 61 symbolisch dargestellt ist.

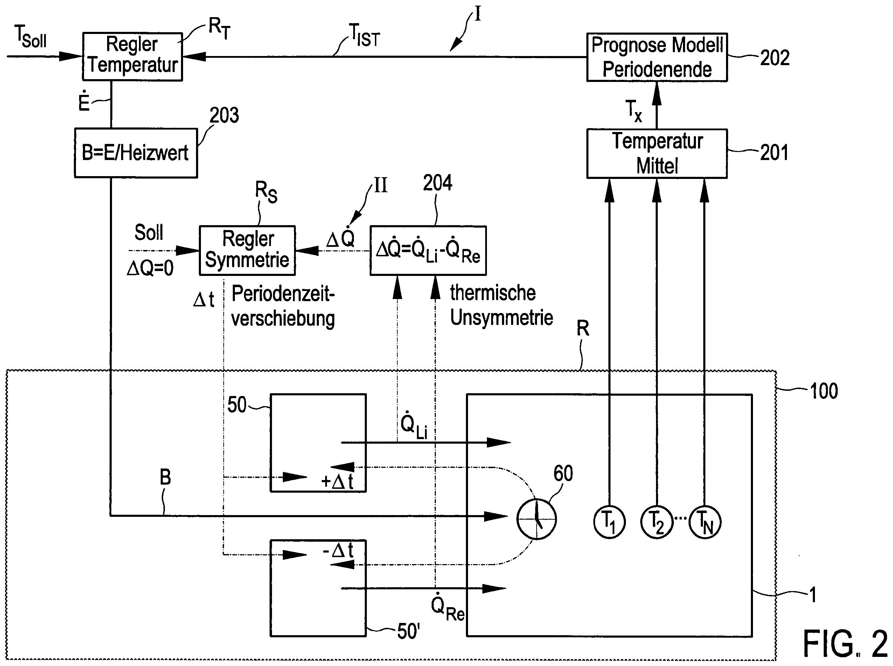

In Bezug auf Fig. 2 wird nunmehr die erste Regelschleife I des Temperaturregelmoduls 200 und die zweite Regelschleife II des Symmetrieregelmoduls 300 näher beschrieben. Fig. 2 verdeutlich schematisch den Aufbau einer ersten Regenschleife I für eine Temperaturregelung eines Temperaturregelmoduls 200 sowie den Aufbau einer zweiten Regelschleife II für eine Symmetrieregelung für ein Symmetrieregelmodul 300 betreffend den linken und rechten Regenerator 50, 50'. Dies wird anhand einer bevorzugten Ausführungsform eines Verfahrens zum geregelten Betrieb des in Fig. 1 beispielhaften gezeigten regenerativ beheizten Industrieofens 100 erläutert. Die mit I bezeichnete erste Regelschleife stellt die Temperaturregelung dar. Die mit II bezeichnete zweite Regelschleife stellt die Symmetrieregelung betreffend den linken und rechten Regenerator 50, 50' dar.

Für beide Regelschleifen I, II dient der Oberofen 1 im Ofenraum 10 des Ofens 100 als Teil der mit R bezeichneten Regelstrecke R. Die Regelstrecke R umfasst auch den linken Regenerator 50 und den rechten Regenerator 50' sowie die Orte der von den Regeneratoren 50, 50' bereitgestellten Wärme $Q_{Li}$ und $Q_{Re}$ aus vorgewärmter Verbrennungsluft VB, die dem Oberofen 1 zugeführt werden. Im eigentlichen Sinne handelt es sich um Wärmeflüsse, die in der Fig. 2 mit entsprechender Symbolik dargestellt sind.

Ziel einer Ofentemperaturregelung ist es, so vorausschauend wie möglich diejenige Brennstoffmenge zu bestimmen, die die technologisch gewünschte Ofentemperatur sichert - und dies bei wechselnden Belastungen und veränderlichen Störgrößen.

Voraussetzung für die Regelbarkeit ist die aktive Aufrechterhaltung der thermischen Symmetrie, was mittels der zweiten Regelschleife II erreicht wird, die weiter unten erläutert ist.

Ein stabiler, gleichmäßiger Brennstoffstrom ohne unnötige Schwankungen ist eine weitere Voraussetzung für effiziente Beheizung. Es sollte demzufolge nicht Aufgabe des Temperaturreglers sein, den unvermeidlichen Temperaturabfall des Gewölbes während etwa 35 .. 40 Sekunden feuerfreier Zeit der Umsteuerung durch erhöhten Brennstoffeinsatz ausgleichen zu wollen - ein weiterer Grund, warum ein einfacher PID-Regler die Aufgabe nicht lösen kann.

Vorliegend wird als Prozesswert die Voraussage der Temperatur zum Periodenende, die von einem Modell des Temperaturverlaufs bereitgestellt wird und den Regeleingriff auch dann ermöglicht, wenn die Temperatur zwar die Endtemperatur noch nicht erreicht hat, aber hinter dem planmäßigen Temperaturanstieg zurückbleibt oder ihm unerwartet vorauseilt. Das wird entsprechend angewendet auf ein gewichtetes Mittel mehrerer Ofentemperaturen.

Für die erste Regelschleife I dient eine Ofenraumtemperatur T als Regelgröße. Dazu werden mehrere repräsentative Oberofentemperaturen $T_1$, $T_2$ ... $T_N$ z. B. mit geeigneten Temperatursensoren 52, 52', 53 gegebenenfalls mit geeigneter Korrektur gemessen. Insbesondere dient der Temperatursensor 53 zur Aufnahme der Ofenraumtemperatur T. Die auf eine Oberofentemperatur angepassten Temperaturwerte aus den verschiedenen Temperaturen $T_1$, $T_2$ .. $T_N$ werden in einer Mittelungseinheit 201 zur Bildung eines gewichteten Temperaturmittels $T_x$ gemittelt. Anschließend wird der Wert des Temperaturmittels $T_x$ einer Extrapolationseinheit 202 zugeführt, die in der Lage ist, nach Maßgabe eines typischen zeitlichen Verlaufs der repräsentativen Oberofentemperatur eine Vorhersage auf den Istwert der Temperatur $T_{IST}$ am jeweiligen Ende einer Feuerperiode der regenerativen Heizung zu bilden. Anstelle des aktuellen Temperaturwertes $T_x$ bildet eben diese vorhergesagte Temperatur $T_{IST}$ den Istwert des Temperaturreglers $R_T$. Der Temperaturregler $R_T$ ist vorliegend in Form eines PID-Reglers gebildet, dem auch ein Sollwert der Temperatur $T_{SOLL}$ zugeführt wird und der einen Bedarf an Brennstoffenergie E aus deren Differenz bestimmt.

Betreffend die Extrapolationseinheit 202 ist vorliegend berücksichtigt, dass je nach Einbaulage der Temperaturfühler 52, 52', 53 im Oberofen 1 bzw. Regeneratorkopf 51, 51' und je nach Dauer eines Umsteuervorgangs die Oberofentemperaturen T abfallen. Dies gilt insbesondere für den Temperaturfühler 53 im Rahmen der folgenden Erläuterung. Damit fällt auch der Realwert der Temperatur T für den Temperaturregler $R_T$ der Oberofentemperatur während der Umsteuerung um 3 - 20K ab und wird danach bei kontinuierlicher Beheizung aufgebaut. Dabei folgt die Temperatur T zumeist einem zeitlichen Verlauf, der etwa durch eine Funktion beschrieben werden kann:

$$T(t) = T_0 + (T_{unendlich} - T_0) * (1 - \exp[t/t_0])$$

wobei

| | |
|---|---|
| $T(t)$ | der angenäherte Temperaturverlauf |
| $T_0$ | der Temperaturtiefpunkt nach Umsteuerung |
| $T_{unendlich}$ | die Temperatur nach sehr langer Zeit |
| $t$ | die Zeit und |
| $t_0$ | eine Zeitkonstante, hier als Formfaktor bezeichnet. |

Aus der so extrapolierten Temperatur $T_{IST}$ am jeweiligen Ende einer Feuerperiode der regenerativen Heizung wird eine Brennstoffenergie E bestimmt, die dem Ofen zuzuführen ist. Unter Berücksichtigung eines Heizwerts des verwendeten Brenngases wird daraus eine Brennstoffmenge B in einer Brennstoffeinheit 203 bestimmt. Die Brennstoffeinheit 203 stellt ein dem Temperaturregler $R_T$ zugeordnetes Stellglied ein --beispielsweise in Form einer Brennstoffdrossel für einen Injektor 20, 20'--, um einen Brennstoffstrom als erste stellbare Stellgröße für einen Oberofen so einzustellen, dass eine gewünschte SollTemperatur $T_{SOLL}$ im Unterschied zur vorgenannten Ist-Temperatur $T_{IST}$ erreicht wird.

Zur Verdeutlichung wird im folgenden Bezug genommen auf Fig. 3. In Fig. 3 ist neben dem Ofendruck P, der Klappenstellung K zur Einstellung der Verbrennungsluftzufuhr zum linken und rechten Regenerator 50, 50' und dem Sauerstoffanteil O des Abgases AG das mit dem Temperaturfühler 53 gemessene und gewonnene Temperaturmittel $T_x$ im Vergleich zu dem aus dem Prognosemodell der Extrapolationseinheit 202 hervorgegangene Temperatursignal für die Ist-Temperatur $T_{IST}$ dargestellt. Von der Prognoseeinheit 202 wird gemäß oben dargestellter Formel zu Beginn $t_B$ und Ende $t_E$ jedes wechselbedingten Temperaturabfalls der Temperatur T die oberen und unteren Spitzentemperaturen erfasst. Daraus wird unter Zugrundelegung der oben genannten Formel des Temperaturverlaufs zu jeder Zeit eine Vorhersage auf die Periodenendtemperatur bereitgestellt, die als Ist-Temperatur $T_{IST}$ für die Regelschleife I verwendet wird. Die Periodendauer t ist dabei zwischen Beginn $t_B$ und Ende $t_E$ jedes wechselbedingten Temperaturabfalls bezeichnet. Der beschriebene Temperaturabfall nach einem Wechsel am Beginn $t_B$ und am Ende $t_E$ der Periodendauer t kann durch einen Temperaturregler $R_T$ nicht ausgeglichen werden. Dieser Temperaturabfall, der in Fig. 3 mit $\Delta T$ bezeichnet ist würde im Gegenteil nur wie eine Störung der Messwerterfassung wirken und wird vorliegend folgerichtig aus dem Temperaturregler $R_T$ ausgefiltert, um eine unerwünschte Reaktion des Temperaturreglers $R_T$ auf den Temperaturabfall $\Delta T$ nach Wechsel der Befeuerung vom linken Regenerator 50 zum rechten Regenerator 50' und umgekehrt zu verhindern. Anstelle des aktuellen Realwerts des Temperaturmittels $T_x$ wird folglich die vorhergesagte Temperatur $T_{IST}$ auf das Periodenende als Reglereingang für den Temperaturregler $R_T$ verwendet. Lange bevor die wirkliche Temperatur $T_x$ den Periodenendwert tatsächlich erreicht, kann der Temperaturregler $R_T$ an der Vorhersage auf das Periodenende erkennen, ob die Temperatur zu schnell oder zu langsam steigt und kann sehr viel früher beginnen, regelungstechnisch einzugreifen.

Unsymmetrische Ofentemperaturen zwischen linker und rechter Befeuerung regenerativer Glasschmelzöfen haben ihre Ursache in einer überwiegenden Zahl der Fälle in thermischer Unsymmetrie der Regeneratoren.

Die Anwendung eines einfachen PID-Reglers, um Brennstoffmengen so zu führen, dass für linkes und rechtes Feuer gleiche Gewölbetemperaturen entstehen, ist die ungeeignete Regelstruktur. Der Versuch, solche Unsymmetrien durch links/rechts unterschiedliche Brennstoffmengen auszugleichen führt regelmäßig dazu, dass die vorhandenen Unsymmetrien sich systematisch vergrößern. Jede Vergrößerung der Brennstoffmenge auf der Seite des kälteren Regenerators - zum Ausgleich der kälteren Luft - führt dazu, den heißeren Regenerator immer heißer zu machen. Jede Verringerung der Brennstoffmenge auf der Seite des heißeren Regenerators - zum Ausgleich der heißeren Luft - führt dazu, den ohnehin schon kälteren Regenerator immer kälter zu machen.

Ein "Modell" der physikalischen Zusammenhänge erlaubt den Aufbau einer Symmetrieregelung der Regeneratoren als Vorbedingungen für symmetrische Ofentemperaturen. Der Wärmeinhalt des linken und rechten Regenerators und die von ihnen bereitgestellte Wärmemenge an vorgeheizter Brennluft sollen für rechtes und linkes Feuer einander angeglichen werden, um die symmetrische Beheizung des Ofenraumes zu sichern. Mindestens sollen die linken und rechten Kammergewölbetemperaturen einander angeglichen werden.

Je nach Ausgangslage müssen 500 bis 4000 MJ Wärme vom heißeren zum kälteren Regenerator transportiert werden, ohne Unterschiede in den Brennstoffmengen zwischen linkem und rechtem Feuer zuzulassen. Das kann durch leicht unterschiedliche Periodenzeiten oder durch unterschiedliche Luftverhältnisse erfolgen. Wird die Verlängerung bzw. Verkürzung der Periodenzeiten z. B. auf 60 Sekunden begrenzt, kann der Symmetrieausgleich zwischen den Regeneratoren bei typisch unsymmetrischer Ausgangslage bis zu 3 Tagen in Anspruch nehmen. Die Gewölbetemperatur des Ofens wird erst durch eine solche Symmetrieregelung überhaupt regelbar.

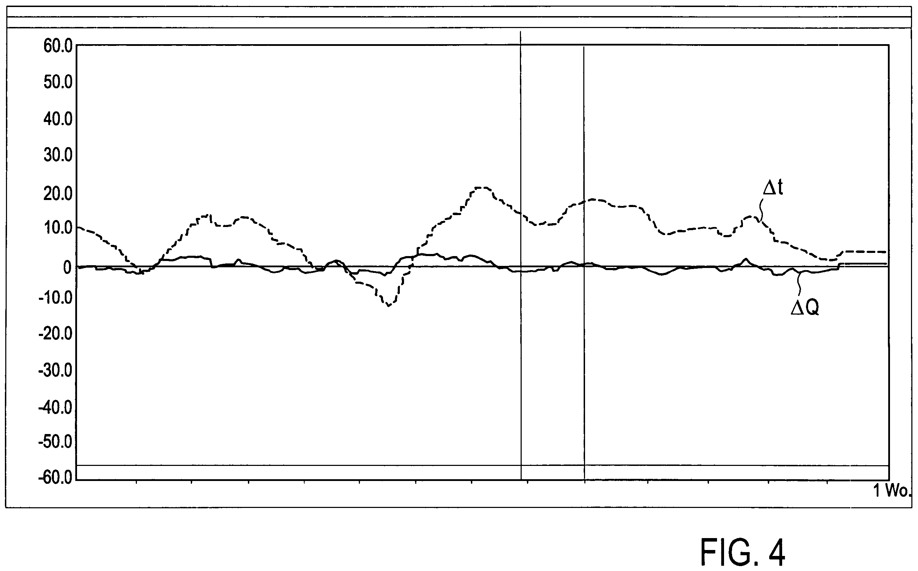

Wieder zurückkommend auf Fig. 2 ist in der zweiten Regelschleife II erkennbar, dass vorliegend zur Bewertung der thermischen Symmetrie der Regeneratoren 50, 50' die Wärme $Q_{Li}$, $Q_{Re}$ der vorgewärmten Verbrennungsluft VB aus den Regeneratoren 50, 50' herangezogen wird. Die einzelnen Wärmemengen $Q_{Li}$, $Q_{Re}$ werden durch ein mathematisches Modell der Regeneratoren 50, 50' geliefert, das in der Differenzeinheit 204 als Softwaremodul implementiert ist und anschließend die Differenz der einzelnen Wärmemengen $Q_{Li}$, $Q_{Re}$ liefert. Die Differenz derselben wird von der Differenzeinheit 204 als Energiestrom der Unsymmetrie $\Delta Q$ in Megawatt dem Symmetrieregler $R_S$ zur Verfügung gestellt. Das mathematisches Modell ist in der Lage nach einer einmaligen Grundanpassung und selbstlernender Justierung die entsprechenden Wärmemengen wie reale Messwerte von Thermoelementen zu liefern. Der Symmetrieregler $R_S$ regelt vorliegend den in Fig. 4 näher gezeigten Unterschied $\Delta Q$ der Wärmemengen zu Null. Dazu stellt der Symmetrieregler $R_S$ für die Regeneratoren 50, 50' eine Zeitspanne $\pm \Delta t$ zur Verfügung, mit der die Periodendauer t für die Befeuerung des Oberofens 1 über die Regeneratoren 50, 50' verändert wird.

Es sei das Beispiel einer kleinen U-Flammen-Schmelzwanne erwähnt, die in der Ausgangslage bei linkem Feuer 45 K heißere Regeneratoren hatte und infolgedessen 20K heißere Gewölbetemperaturen. Nach Herstellung der Symmetrie unterscheiden sich die Kammertemperaturen nur noch um 0 .. 3 K, die Gewölbetemperaturen im Ofen sind für linkes und rechtes Feuer nahezu gleich - Vorrausetzung für ihre Regelbarkeit.

Werden beide Feuerseiten mit gleichen Lambdawerten betrieben und sind beide Regeneratoren auf etwa gleichem Zustand, findet der Symmetrieregler nach Herstellung des Wärmeausgleichs zwischen den Regeneratorseiten ohne Zutun des Bedieners wieder zu gleichen Periodenzeiten für linkes und rechtes Feuer.

Umgekehrt: Eine danach sich einstellende dauerhafte Schieflage - z. B. die linke Periode muss dauerhaft 20sec länger sein, um die Symmetrie aufrecht zu erhalten - eine solche dauerhafte Schieflage liefert nach Herstellung der Symmetrie zusätzliche Informationen, z. B. über Falschluft auf der Abgasseite des betroffenen Regenerators oder über Regeneratorverschleiß. Entsprechendes gilt für dann sichtbare Temperaturunterschiede am Kammerfuß, vorausgesetzt man kann sie erfassen und technologisch richtig interpretieren.

Sind die Brennluft- und/oder Abgasmengen der Regeneratoren links und rechts unterschiedlich, dann ist die Symmetrie der Temperaturen allein nicht mehr ausreichend. Es sind dann die Energieeinträge durch vorgewärmte Brennluft rechts und links auszugleichen . Dazu gibt es ein SPS-basiertes Modell des Regenerators in der Steuerung, das die entsprechenden - nicht mehr direkt messbare Größen - bereitstellt.

Aus der Fig. 4 ist beispielhaft ersichtlich, dass für einen vergleichsweise großen Zeitraum für den linken Regenerator 50 ein positiver Wert von +Δt überwiegt. Dies kann im Rahmen eines besonders bevorzugten Auswertemoduls zur technologischen Bewertung des Zustandes des linken Regenerators herangezogen werden. Vorliegend ist festzustellen, dass eine Unsymmetrie trotz des zweiten Regelkreises II existiert. D.h. während des positiven Regelwerts der Zeitspanne +Δt musste offensichtlich die Periodendauer der Befeuerung mit dem linken Regenerators 50 zur Befeuerung des Oberofens 1 regelmäßig verlängert werden - man kann daraus auf einen unkontrollierten Lufteinbruch im Ofenraum 1 oder im Regenerator 50 schließen.

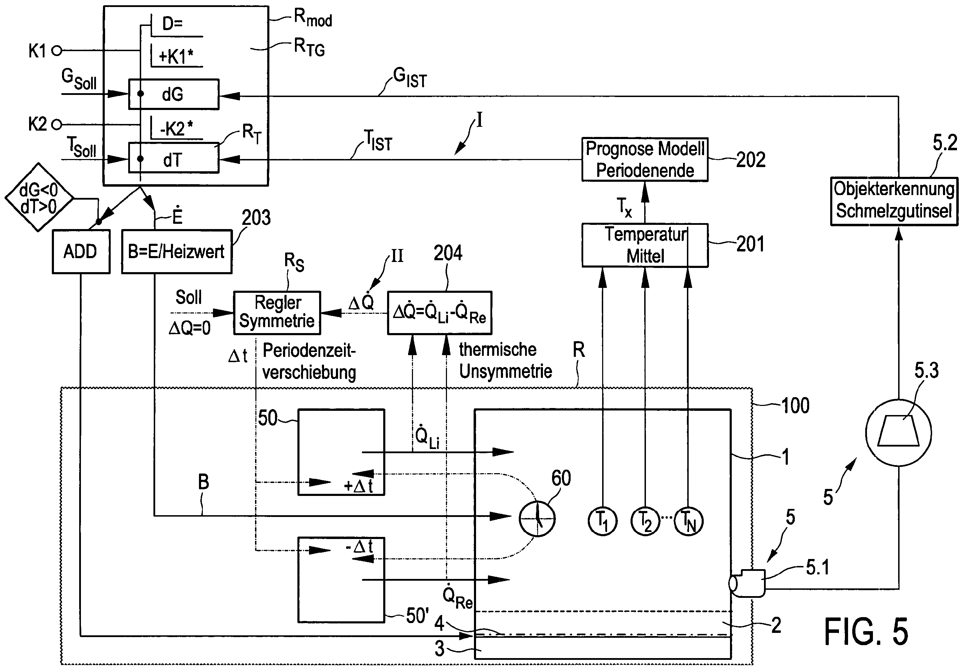

In der Tat sind die bis hierher beschriebenen Regelmethoden noch weiter verbesserbar, um noch gleichmäßigere und stabile Schmelzbedingungen und gleichbleibende Ofentemperaturen zu sichern, da veränderliche Wärmeübertragung zwischen einem Oberofenraum 1 und einem in Fig. 5 gezeigten Schmelzgut 3 im Unterofenraum 2 sowohl die Ofentemperaturen als auch die Schmelzbedingungen deutlich beeinflussen. Insbesondere der Fall einer deutlichen Verringerung der Wärmeübertragung durch Ausbildung oder Vergrößerung einer Schaumschicht auf der Oberfläche des Schmelzgutes 3 ist problematisch: in diesem Falle steigt die Gewölbetemperatur des als Schmelzofen gebildeten Industrieofens 100 deutlich an, dies ist jedoch kein Anzeichen für ein Überangebot an Energie im Oberofenraum 1 überhaupt, sondern nur für einen Wärmeübertragungsstau an das Schmelzgut 3.

Methoden zur messtechnischen Bewertung der Wärmeübertragung vom Oberofenraum 1 an das Schmelzgut 3 stehen kaum zur Verfügung. Geräte hierfür in den Ofenraum einzuführen wäre mit unwirtschaftlich hohem Aufwand verbunden und selbst dann könnte man nur mit Punktmessungen rechnen, die nicht ausreichend repräsentativ sind. Zwar kann eine bei einer bestimmten Temperatur und bei einer bestimmten Schmelzleistung sich ausbildende Flächeninanspruchnahme von Schmelzgutinseln 4 auf der Schmelzoberfläche des Schmelzgutes 3 als Indikator für die tatsächliche aktuelle Wärmeübertragung genutzt werden; diese Flächeninanspruchnahme kann durch Auswertung von punktweiser Helligkeiten im Ofenraumbild 5.3 einer Ofenraumkamera 5.1 jedoch nur unzureichend ermittelt werden und eine darauf aufbauende Temperaturregelung der Schmelzwanne kann kaum durch eine Regelung der Flächeninanspruchnahme der Schmelzgutinseln 4 ersetzt werden.

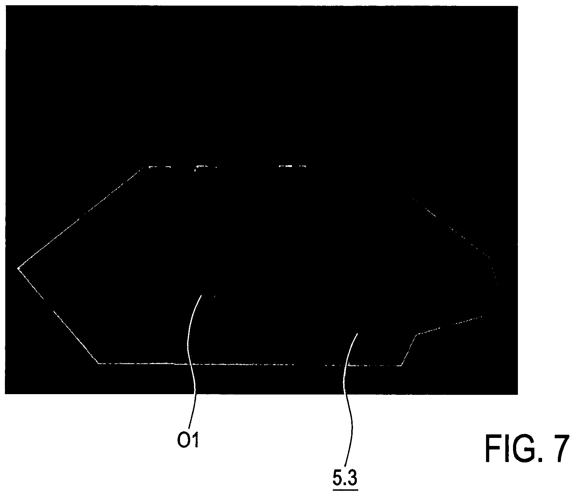

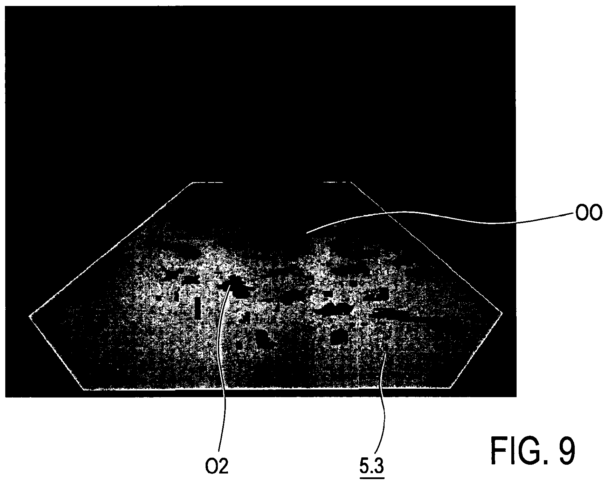

Denn --zum Einen-- hat sich gezeigt, dass die Bestimmung der Flächeninanspruchnahme für die Schmelzgutinseln 4 allein auf Grundlage punktweiser Bildhelligkeiten nicht ausreichend genau ist, da sie die Analyse anfällig macht für driftende Bildhelligkeit, und da sie keine zuverlässige Unterscheidung zu Bubblingflecken ermöglicht. Vorliegend ist vielmehr die Erkennung von Objekten auf der Schmelzoberfläche auf dem Ofenraumbild 5.3 --hier eine Folge von Videobildern-- der Ofenraumkamera 5.1 vorgesehen. Dazu werden an sich bekannte Methoden der digitalen Filterung des Ofenraumbildes zur Objekterkennung eingesetzt. Als Bildobjekte werden typischerweise erkannt: Schmelzgutinseln 4, Bubblingflecken wie in Fig. 7 gezeigt, Schaumstrukturen wie in Fig. 9 gezeigt und andere Objekte wie z.B. auch Verschmutzungen am Kameraobjektiv. Darüberhinaus sind aber Schmelzgutinseln 4 gut zu identifizieren. Schmelzgutinseln haben sich verändernde Ortskoordinaten ihres Flächenschwerpunktes in aufeinanderfolgenden Ofenraumbildern, wobei der Flächenschwerpunkt einer Trajektorie folgt. Dagegen sind die Ortskoordinaten eines Flächenschwerpunkts bei einem Bubbling-Fleck an einer festen Position. Schmelzgutinseln weisen eine geringere Helligkeit auf als eine Schaumstruktur. Eine Verschmutzung auf einem Objektiv der Ofenraumkamera oder sonstigem Teil der Bildverarbeitung 5 ist dadurch identifizierbar, dass diese in aufeinanderfolgenden Bildanalysen unveränderlich sind in Position, Größe und Helligkeit. D.h. es ist möglich, die Schmelzgutinseln 4 von allen anderen Objekten auf einem Videobild zu unterscheiden und die Flächeninanspruchnahme durch die Schmelzgutinseln auch dort ausreichend genau zu bestimmen, wo sie im direkten Kontakt mit Bubblingflecken sind oder sich durch die Bubblingflecken hindurchbewegen.

Fig. 5 zeigt schematisch die Darstellung einer ersten und zweiten Regelschleife wie in Fig. 2 bei einer Steuereinrichtung, wobei die erste Regelschleife abgewandelt ist gemäß dem Konzept der besonders bevorzugten Weiterbildung der Erfindung. Dazu ist der erste Regler für eine kombinierte Regelgröße ausgebildet, wobei die kombinierte Regelgröße bestimmt wird aus einer Ofenraumtemperatur als erste Regelgröße und einer Schmelzgutbedeckung als zweite Regelgröße. Dazu ist der Ofenraum des Industrieofens 100 mit dem Oberofenraum 1 und dem Unterofenraum 2 dargestellt, wobei in einer Glasschmelzwanne des Unterofenraums 2 das Schmelzgut 3 mit einzelnen Schmelzgutinseln 4 dargestellt ist. Eine Bildverarbeitung 5 sieht unter anderem die Ofenraumkamera 5.1 und eine daran angeschlossene Objekterkennung für ein Ofenraumbild, hier Videobild, der Ofenraumkamera 5.1 vor. Die Objekterkennung 5.2 nutzt an sich bekannte Methoden der digitalen Filterung eines Ofenraumbildes 5.3 zur Unterscheidung grundsätzlich unterschiedlicher Objekte anhand ihrer Erscheinung --wie Helligkeit, Form und Größe-- und Bewegung. Als typische Objekte des Ofenraumbildes werden insbesondere die oben genannten Objekte und die eigentlichen Schmelzgutinseln 4 aus noch nicht verflüssigtem Schmelzgut erkannt. Diese lassen sich unterscheiden von den anderen Objekten, erkennen und eindeutig identifizieren.

Über die Ofenraumkamera 5.1 sowie einer Objekterkennung 5.2 an einem von der Ofenraumkamera gelieferten Ofenraumbild ist es damit möglich Schmelzgutinseln von allen anderen Objekten auf dem Ofenraumbild zu unterscheiden. Damit lässt sich eine Flächeninanspruchnahme durch die Schmelzgutinsel zur Bestimmung der Schmelzgutbedeckung ausreichend genau bestimmen. Insbesondere ist dies von Wichtigkeit, wenn ein direkter Kontakt eines Bubbling-Fleckens mit einer Schmelzgutinsel besteht, beispielsweise wenn sich die Schmelzgutinsel durch die Bubbling-Flecken hindurchbewegen.

Auf diese Weise ist es möglich, einen im Vergleich zu bisher bekannten Methoden verbesserten Wert einer Schmelzgutbedeckung $G_{IST}$ an einen modifizierten ersten Regler $R_{mod}$ zu liefern. Der modifizierte Regler $R_{mod}$ hat eine kombinierte Regelgröße $R_{TG}$, deren Regelabweichung D sich bestimmt aus einer Regelabweichung dT einer Ofenraumtemperatur $T_{SOLL}$ - $T_{IST}$ und einer Regelabweichung dG einer Flächenbedeckung $G_{SOLL}$ - $G_{IST}$. Die kombinierte Regelgröße $R_{TG}$ hat damit eine Regelabweichung, die sich bestimmt als D = k1*dT - k2*dG; dabei sind k1 und k2 dynamisch einstellbare Verhältnisparameter, die sich nach Erfahrungswerten oder auch adaptiv anpassen lassen.

Im Ergebnis wird also die Brennstoffzufuhr zum Ofenraum --zum Anderen-- nicht notwendigerweise so geregelt, dass eine konstante Flächeninanspruchnahme durch die Schmelzgutinseln 4 erreicht wird, d.h. ein Temperaturregler $R_T$ der Fig. 2 für die Temperatur $T_{IST}$ im Oberofen 1 wird nicht vollständig durch eine Regelung der Flächeninanspruchnahme durch die Schmelzgutinseln 4 ersetzt. Es wurde erkannt, dass eine Regelung der Ofenbeheizung, die nur auf die Gemengebedeckung allein oder nur auf die Temperaturregelung allein abstellt, zu nicht zu akzeptierenden Temperaturschwankungen im Ofenraum führen würde. Konkret weist der kombinierte Regler für die Ofenbeheizung im Ansatz den oben beschriebenen Temperaturregler $R_T$ auf, dessen Ausgang weiterhin die dem Ofen zuzuführende Brennstoffenergie darstellt.

Dessen Regelabweichung dT ist nun ersetzt durch eine gewichtete Differenz zweier Regelabweichungen:

1. Regelabweichung dT der Temperatur: dT = Sollwert Temperatur minus Istwert der repräsentativen Ofentemperatur

2. Regelabweichung dG der Schmelzgutbedeckung: dG = Sollwert Schmelzgutbedeckung minus Istwert Schmelzgutbedeckung, ermittelt durch Objekterkennung und lidentifizierung aus dem Videobild der Ofenraumkamera.

Die kombinierte Regelabweichung des Ofenbeheizungsreglers wird damit zur oben genannten D = k1 * dT - k2 * dG; dabei sind k1 und k2 frei einstellbare Verhältnisparameter. Grundsätzlich lässt sich dieser Ansatz mit einer weiteren Gewichtung von Einflussfaktoren als Beitrag zur kombinierten Regelabweichung D erweitern. So lässt sich für dT eine gewichtetes Mittel von Regelabweichungen $SUM_i(dT_i)$ ansetzen, das die oben genannten auf eine Oberofentemperatur angepassten Temperaturwerte aus den verschiedenen Temperaturen $T_1$, $T_2$ .. $T_N$ berücksichtigen kann. Auch lässt sich ggfs. der Einfluss einer Flächenbedeckung weiterer Objekte analytisch berücksichtigen durch ein gewichtetes Mittel von Regelabweichungen $SUM_j(dG_j)$. Im vorliegenden beispielhaften Fall ist i=j=1.

Diese Massnahme erlaubt bereits eine besonders vorteilhafte Diskriminierung unterschiedlicher Fälle, für die unterschiedliche Regelkonzepte erfolgreich greifen können:

- sind die Temperatur zu gering, d.h. dT>0 und zugleich die Gemengebedeckung zu groß, d.h. dG<0, so wird die Energieanforderung E erhöht;

- sind die Temperatur zu groß, d.h. dT<0 und zugleich die Gemengebedeckung niedriger als erwartet, d.h. dG>0, so wird die Energieanforderung E vermindert;

- sind die Temperatur geringer als der Sollwert, d.h. dT>0 und zugleich die Gemengebedeckung ebenfalls geringer als der Sollwert, d.h. dG>0, so wird die Regeldifferenz sich nahe Null einstellen, der Regler toleriert Temperaturen unter der Solltemperatur, solange die Gemengebedeckung ausreichend klein ist;

- sind die Temperatur aber zu groß, d.h. dT<0 und zugleich die Gemengebedeckung ebenfalls zu groß, d.h. dG<0, liegt offensichtlich der Fall behinderter Wärmeübertragung vom Ofenraum an das Schmelzgut vor, d.h. Wärmeübertragungsstau, z. B. typischerweise durch Schaumbildung die die Wärmeübertragung behindert. Dieser kritische Sonderfall kann nicht durch Erhöhung der Brennstoffenergie gelöst werden.

Es werden vorteilhaft zusätzliche Regelalgorithmen ADD aktiviert; dazu gehört, wenn möglich:

- eine Erhöhung der Bubblingintensität;

- eine Erhöhung einer elektrischen Zusatzheizung;

- durch kurzzeitige Perioden reduzierenden Feuers, um die Auflösung von Schaumoberflächen zu bewirken, dies ggfs. ergänzt durch Rußeinblasen zur Beseitigung von Schaum.

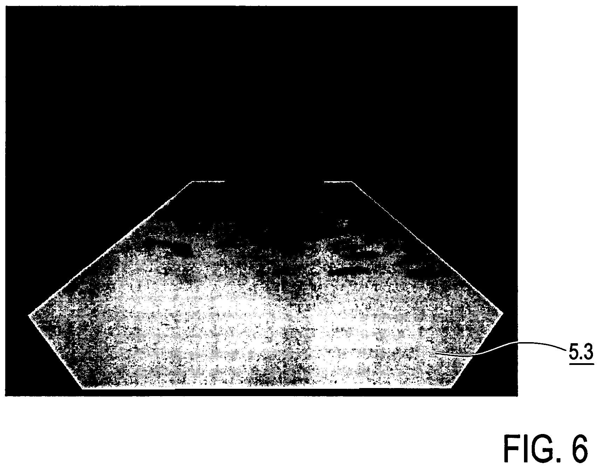

Zur Veranschaulichung zeigt Fig. 6 ein Beispiel eines geometrisch gerichteten unbearbeiteten Ofenraumbildes 5.3, wie es von einer Ofenraumkamera 5.2 als Videobild aufgenommen wurde.

In Fig. 7 ist ein ähnliches Ofenraumbild 5.3 gezeigt, wie es von einer Ofenraumkamera 5.2 als Videobild aufgenommen wurde, das von einer Objekterkennung 5.2 bearbeitet wurde; als Ergebnis sind Bubblingflecken O1 kenntlich gemacht. Die Ortskoordinaten ihres Flächenschwerpunktes in aufeinanderfolgenden Videobildern verändern sich nicht.

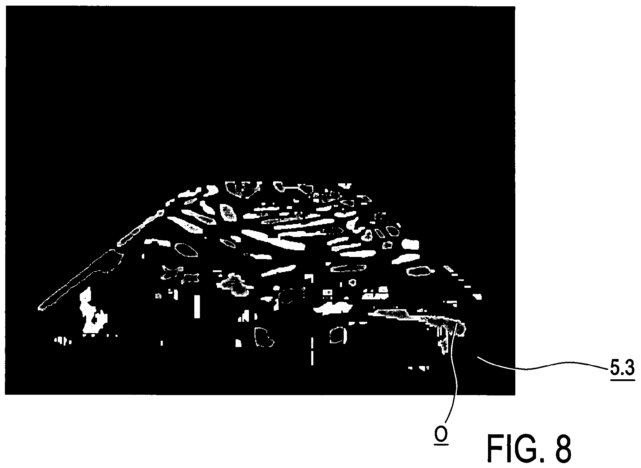

In Fig. 8 ist ein ähnliches Ofenraumbild 5.3 gezeigt, wie es von einer Ofenraumkamera 5.2 als Videobild aufgenommen wurde, das von einer Objekterkennung 5.2 bearbeitet wurde; als Ergebnis sind in einer Falschfarbendarstellung eine ganze Reihe von Objekten O --darunter auch die relevanten Schmelzgutinseln 4-- farbig kenntlich gemacht und aufgrund ihrer Erscheinung (insbesondere Helligkeit, Form und Größe), Position und Trajektorie unterschieden. Die Ortskoordinaten eines Flächenschwerpunktes der Schmelzgutinseln 4 in aufeinanderfolgenden Videobildern verändern sich und folgen einer Trajektorie. Verschmutzungen auf dem Objektiv der Ofenraumkamera 5.1 können identifiziert werden dadurch, dass sie in aufeinanderfolgenden Bildanalysen unveränderlich sind in Position, Größe und Helligkeit.

In Fig. 9 ist ein ähnliches Ofenraumbild 5.3, wie es von einer Ofenraumkamera 5.2 als Videobild aufgenommen wurde, gezeigt, das von einer Objekterkennung 5.2 bearbeitet wurde; als Ergebnis sind Schaumstrukturen O2 von den noch nicht aufgeschmolzenes Schmelzgut O enthaltenden Schmelzgutinseln 4 unterschieden. Schmelzgutinseln 4 unterscheiden sich von Schaumstrukturen O2 durch ihre geringere Helligkeit. Lediglich die Flächeninanspruchnahme der Schmelzgutinseln 4 wird zur Bestimmung der Schmelzgutbedeckung herangezogen.

**Patentansprüche**

1. Verfahren zum geregelten Betrieb eines regenerativ beheizten Industrieofens (100) mit einem Ofenraum (10), insbesondere mit einer Schmelzwanne, insbesondere für Glas, aufweisend die Schritte:

    - Injizieren von Brennstoff in den Ofenraum (10) über wenigstens einen Brennstoff-Injektor (20, 20'), der zur Injektion von Brennstoff, insbesondere praktisch ohne Verbrennungsluft, ausgebildet ist,
    - periodisch abwechselnde Führung von einerseits Verbrennungsluft zum Ofenraum (10) in einer ersten Periodendauer ($t_1$) und andererseits Abgas (AG) aus dem Ofenraum (10) in einer zweiten Periodendauer ($t_2$) separat vom Brennstoff mittels einem dem wenigstens einen Brennstoff-Injektor (20, 20') zugeordneten linken Regenerator (50) und rechten Regenerator (50'), die zur regenerativen Speicherung von Wärme aus dem Abgas und Übertragung von Wärme auf die Verbrennungsluft ausgebildet sind, wobei

in einer ersten Regelschleife (I) für eine Temperaturregelung:

    - über eine Ofenraumtemperatur (T) als Regelgröße,
    - einen ersten Regler ($R_T$) für die Ofenraumtemperatur (T), sowie
    - über ein dem ersten Regler ($R_T$) zugeordnetes Stellglied eine erste stellbare Stellgröße in Form eines Brennstoffstroms (B) und/oder eines Verbrennungsluftstroms (VB) eingestellt wird, **dadurch gekennzeichnet, dass**

in einer zweiten Regelschleife (II) für eine Symmetrieregelung betreffend den linken und rechten Regenerator (50, 50'):

    - über eine für den Wärmeinhalt der Verbrennungsluft (VB) des ersten Regenerators (50) signifikante erste Vorwärmekenngröße ($Q_{Li}$, T) und eine für den Wärmeinhalt der Verbrennungsluft (VB) des zweiten Regenerators (50') signifikante zweite Vorwärmekenngröße ($Q_{Re}$, T), wobei jeweils die Vorwärmekenngröße als Maß für den Wärmeinhalt der Verbrennungsluft angegeben wird, und die Vorwärmekenngröße als Wärme aus vorgewärmter Verbrennungsluft gebildet ist, wobei die Wärme aus vorgewärmter Verbrennungsluft aus einer Modellberechnung des Regenerators (50, 50') gewonnen wird,

- einem zweiten Regler ($R_s$) für den Unterschied der ersten und zweiten Vorwärmekenngröße, sowie

- über ein dem zweiten Regler ($R_s$) zugeordnetes Stellglied eine zweite stellbare Stellgröße in Form einer den Wärmeübertrag zwischen dem ersten und zweiten Regenerator beeinflussenden Wärmeübertragungsgröße eingestellt wird, wobei die zweite stellbare Stellgröße in Form einer den Wärmeübertrag zwischen dem ersten und zweiten Regenerator beeinflussenden Wärmeübertragungsgröße derart eingestellt wird, dass der Betrag des Unterschieds zwischen der ersten und zweiten Vorwärmekenngröße unterhalb eines Schwellwerts nahe Null gehalten ist; wobei der Unterschied zwischen der ersten und zweiten Vorwärmekenngröße als Regelergebnis der zweiten Regelschleife zur Bewertung des Zustandes des Regenerators (50, 50') verwendet wird, und

als Wärmeübertragungsgröße eine Zeitspanne ($\pm\Delta t$) eingestellt wird, um welche für den heißeren des ersten und zweiten Regenerators die erste Periodendauer verlängert und/oder für den kälteren des ersten und zweiten Regenerators die erste Periodendauer verkürzt wird, und/oder als Wärmeübertragungsgröße eine Zeitspanne ($\pm\Delta t$) eingestellt wird, um welche für den kälteren des ersten und zweiten Regenerators die zweite Periodendauer verlängert und/oder für den heißeren des ersten und zweiten Regenerators die zweite Periodendauer verkürzt wird.

2. Verfahren nach Anspruch 1, **dadurch gekennzeichnet, dass** der Unterschied der ersten und zweiten Vorwärmekenngröße ein den Wärmeinhalten zugeordneter Wärmemengen-Unterschied ($\Delta Q$) ist.

3. Verfahren nach Anspruch 1 oder 2 **dadurch gekennzeichnet, dass** die Vorwärmekenngröße zusätzlich als Produkt aus einer Verbrennungsluftmenge und einer Regeneratorkopftemperatur gebildet ist, wobei die Verbrennungsluftmenge und/oder Regeneratorkopftemperatur gemessen ist und/oder die Regeneratorkopftemperatur eine niedrigste Regeneratorkopftemperatur ist.

4. Verfahren nach Anspruch 3 **dadurch gekennzeichnet, dass** die Vorwärmekenngröße als Mittel aus wenigstens einer Regeneratorkopftemperatur und/oder Oberofentemperatur gebildet ist und jeweils am Ende einer ersten Periodendauer und/oder einer zweiten Periodendauer gebildet ist.

5. Verfahren nach Anspruch 4, **dadurch gekennzeichnet, dass** die Vorwärmekenngröße als gewichtetes Mittel aus einem höchsten und einem niedrigsten Wert der Regeneratorkopftemperaturen und der zugehörigen Oberofentemperaturen jeweils am Ende von Abgasperiode und Luftperiode gebildet ist.

6. Verfahren nach einem der Ansprüche 1 bis 5 **dadurch gekennzeichnet, dass** eine Ofenraumtemperatur als gewichtetes Mittel einer Anzahl verschiedener ortsunterschiedlicher, Temperaturmessungen im Oberofen und/oder Regeneratorkopf gebildet ist.

7. Verfahren nach einem der Ansprüche 1 bis 6 **dadurch gekennzeichnet, dass** eine Extrapolation einer Ofenraumtemperatur auf eine Ofenraumtemperatur am Ende einer jeden ersten und der zweiten Periodendauer vorgenommen wird auf Grundlage eines modellierten zeitlichen Verlaufes einer repräsentativen Ofenraumtemperatur.

8. Verfahren nach einem der Ansprüche 1 bis 7 **dadurch gekennzeichnet, dass** nach einem durch die periodisch abwechselnde Führung bedingten Temperaturabfall in der ersten Regelschleife über ein dem ersten Regler zugeordnetes Stellglied eine erste stellbare Stellgröße in Form eines Brennstoffstroms und/oder eines Verbrennungsluftstroms eingestellt wird und dazu ein zusätzlicher Aufschlag derselben dem Ofen zugeführt wird, wobei der Aufschlag aus dem Betrag des wechselbedingten Brennstoffausfalls und/oder aus einer Geschwindigkeit der Temperaturzunahme nach abgewechselter Führung gebildet wird.

9. Verfahren nach einem der Ansprüche 1 bis 8 **dadurch gekennzeichnet, dass** der Unterschied zur Bewertung einer weiteren Einflussgröße verwendet wird und/oder zur Bewertung eines unkontrollierten Lufteinbruchs im Ofenraum und/oder Regenerator.

10. Verfahren nach einem der Ansprüche 1 bis 9 **dadurch gekennzeichnet, dass** in der ersten Regelschleife (I) eine Temperaturregelung kombiniert wird mit einer Schmelzgutbedeckungs-Regelung indem:

- aus einer Ofenraumtemperatur (T) als erste Regelgröße und einer Schmelzgutbedeckung (G) als zweite Regelgröße eine kombinierte Regelgröße (D) bestimmt wird, insbesondere die erste und zweite Regelgröße mit entgegengesetztem Vorzeichen addiert werden, und

- der erste Regler ($R_{TG}$), insbesondere ein PID-Regler, für die kombinierte Regelgröße (D) ausgebildet ist, sowie

- über ein dem ersten Regler ($R_{TG}$) zugeordnetes Stellglied eine erste stellbare Stellgröße in Form eines Brennstoffstroms und/oder eines Verbrennungsluftstroms eingestellt wird.

11. Verfahren nach Anspruch 10 **dadurch gekennzeichnet, dass** die erste und zweite Regelgröße mit entgegengesetztem Vorzeichen gewichtet addiert werden, wobei die Gewichte ($K_1$, $K_2$) einstellbar sind.

12. Verfahren nach Anspruch 10 oder 11 **dadurch gekennzeichnet, dass** für den Fall, dass eine Regelabweichung (dT) Sollwert minus Istwert der ersten Regelgröße und eine Regelabweichung (dG) Sollwert minus Istwert der zweiten Regelgröße jeweils kleiner Null ist, über ein dem ersten Regler zugeordnetes Hilfs-Stellglied (ADD) eine stellbare Hilfs-Stellgröße in Form einer Bubblingintensität und/oder einer elektrischen Zusatzheizung und/oder eines kurzzeitig reduzierten Brennstoffstroms und/oder Verbrennungsluftstroms eingestellt wird.

13. Verfahren nach einem der Ansprüche 1 bis 12 **dadurch gekennzeichnet, dass** eine Schmelzgutbedeckung (G) bestimmt wird mittels einer Objekterkennung (5.2) bei einer Bildverarbeitung eines Bildes einer Schmelzoberfläche, wobei

   - Schmelzgutinseln (4) von anderen Objekten unterschieden werden, insbesondere von Bubblingflecken (01) und/oder Schaumstrukturen (02) und/oder Verschmutzungen der Bildverarbeitung unterschieden werden, und
   - nur eine Flächeninanspruchnahme der Schmelzgutinseln (4) zur Bestimmung der Schmelzgutbedeckung herangezogen wird.

14. Verfahren Anspruch 13 **dadurch gekennzeichnet, dass** die Unterscheidung von Schmelzgutinseln (4) von anderen Objekten erfolgt anhand einer Position und/oder Trajektorie und/oder einer Helligkeit und/oder einer Größe eines Objektes (O).

15. Regenerativ beheizter Industrieofen (100) mit einem Ofenraum, insbesondere mit einer Schmelzwanne, insbesondere für Glas, aufweisend:

   - wenigstens einen Brennstoff-Injektor (20) zum injizieren von Brennstoff in den Ofenraum, der zur Injektion von Brennstoff, insbesondere praktisch ohne Verbrennungsluft, ausgebildet ist,
   - einen dem wenigstens einen Brennstoff-Injektor zugeordneten linken Regenerator (50) und rechten Regenerator (50'), die zur regenerativen Speicherung von Wärme aus dem Abgas und Übertragung von Wärme auf die Verbrennungsluft (VB) ausgebildet sind zur periodisch abwechselnden Führung von einerseits Verbrennungsluft zum Ofenraum in einer ersten Periodendauer und andererseits Abgas aus dem Ofenraum in einer zweiten Periodendauer separat vom Brennstoff, und
   - eine Steuereinrichtung (1000) zur Ausführung eines Verfahrens nach einem der Ansprüche 1 bis 14, mit einer Industrieofen-Regelung aufweisend:

ein Temperaturregelmodul (200) für eine erste Regelschleife (I) mittels dem:

   - über eine Ofenraumtemperatur als Regelgröße, und
   - einen ersten Regler ($R_T$) für die Ofenraumtemperatur, sowie
   - über ein dem ersten Regler ($R_T$) zugeordnetes Stellglied eine erste stellbare Stellgröße in Form eines Brennstoffstroms und/oder eines Verbrennungsluftstroms einstellbar ist, **gekennzeichnet durch**

ein Symmetrieregelmodul (300) betreffend den linken und rechten Regenerator (50, 50') für eine zweite Regelschleife (II) mittels dem:

   - über eine für den Wärmeinhalt der Verbrennungsluft des ersten Regenerators signifikante erste Vorwärmekenngröße ($Q_{Li}$, T) und eine für den Wärmeinhalt der Verbrennungsluft des zweiten Regenerators signifikante zweite Vorwärmekenngröße ($Q_{Re}$, T), wobei jeweils die Vorwärmekenngröße als Maß für den Wärmeinhalt der Verbrennungsluft angegeben ist, und die Vorwärmekenngröße als Wärme aus vorgewärmter Verbrennungsluft gebildet ist, wobei die Wärme aus vorgewärmter Verbrennungsluft aus einer Modellberechnung des Regenerators (50, 50') gewonnen ist, und
   - einem zweiten Regler ($R_S$) für den Unterschied der ersten und zweiten Vorwärmekenngröße, sowie
   - über ein dem zweiten Regler ($R_S$) zugeordnetes Stellglied eine zweite stellbare Stellgröße in Form einer den Wärmeübertrag zwischen dem ersten und zweiten Regenerator beeinflussenden Wärmeübertragungsgröße einstellbar ist, wobei

die zweite stellbare Stellgröße in Form einer Wärmeübertragung zwischen dem ersten und zweiten Regenerator beeinflussenden Wärmeübertragungsgröße derart einstellbar ist, dass der Betrag des Unterschieds zwischen der ersten und zweiten Vorwärmekenngröße unterhalb eines Schwellwerts nahe Null gehalten ist; wobei der Unterschied zwischen der ersten und zweiten Vorwärmekenngröße als Regelergebnis der zweiten Regelschleife zur Bewertung des Zustandes des Regenerators (50, 50') verwendet wird, und

als Wärmeübertragungsgröße eine Zeitspanne ($\pm\Delta t$) eingestellt wird, um welche für den heißeren des ersten und zweiten Regenerators die erste Periodendauer verlängert und/oder für den kälteren des ersten und zweiten Regenerators die erste Periodendauer verkürzt wird, und/oder als Wärmeübertragungsgröße eine Zeitspanne ($\pm\Delta$) eingestellt wird, um welche für den kälteren des ersten und zweiten Regenerators die zweite Periodendauer verlängert und/oder für den heißeren des ersten und zweiten Regenerators die zweite Periodendauer verkürzt wird.

**Claims**

1.  Method for controlled operation of a regeneratively heated industrial furnace (100) with a furnace chamber (10), more particularly with a melting tank, more particularly for glass, having the steps:

    - injection of fuel into the furnace chamber (10) via at least one fuel injector (20, 20'), which is designed for the injection of fuel, more particularly practically without combustion air,
    - periodically alternating directing of, on the one hand, combustion air to the furnace chamber (10) in a first period ($t_1$) and, on the other hand, exhaust gas (AG) from the furnace chamber (10) in a second period ($t_2$) separately from the fuel by means of a left regenerator (50) and right regenerator (50') assigned to the at least one fuel injector (20, 20'), which are designed for regenerative storage of heat from the exhaust gas and transfer of heat to the combustion air, whereby

    in a first control loop (I) for a temperature control:

    - by way of a furnace chamber temperature (T) as control variable,
    - a first controller ($R_T$) for the furnace chamber temperature (T), and also
    - by way of an actuator assigned to the first controller ($R_T$) a first adjustable actuating variable is set in the form of a fuel flow (B) and/or of a combustion air flow (VB), **characterised in that**

    in a second control loop (II) for a symmetrical control relating to the left and right regenerator (50, 50'):

    - by way of a significant first characteristic preheat value ($Q_{Li}$, T) for the heat content of the combustion air (VB) of the first regenerator (50) and a significant second characteristic preheat value ($Q_{Re}$, T) for the heat content of the combustion air (VB) of the second regenerator (50'), whereby in each case the characteristic preheat value is given as a measure for the heat content of the combustion air, and the characteristic preheat value is formed as heat from preheated combustion air, whereby the heat from preheated combustion air is obtained from a model calculation of the regenerator (50, 50'),

    - a second controller ($R_S$) for the difference of the first and second characteristic preheat value, and also
    - by way of an actuator assigned to the second controller ($R_S$) a second adjustable actuating variable in the form of a heat transfer quantity influencing the heat transfer between the first and second regenerator is set, whereby the second adjustable actuating variable in the form of a heat transfer quantity influencing the heat transfer between the first and second regenerator is set in such a way that the amount of the difference between the first and second characteristic preheat value is kept below a threshold value close to zero; whereby the difference between the first and second characteristic preheat value is used as control result of the second control loop to evaluate the state of the regenerator (50, 50'), and,

    as heat transfer quantity, a time-span ($\pm\Delta t$) is set, by which the first period is extended for the hotter of the first and second regenerator and/or the first period is shortened for the colder of the first and second regenerator, and/or, as heat transfer quantity, a time-span ($\pm\Delta t$) is set, by which the second period is extended for the colder of the first and second regenerator and/or the second period is shortened for the hotter of the first and second regenerator.

2.  Method according to claim 1, **characterised in that** the difference of the first and second characteristic preheat value is a heat quantity difference ($\Delta Q$) assigned to the heat contents.

3.  Method according to claim 1 or 2 **characterised in that** the characteristic preheat value is formed additionally as product of a quantity of combustion air and a regenerator head temperature, whereby the quantity of combustion air and/or regenerator head temperature is measured and/or the regenerator head temperature is a lowest regenerator head temperature.

4.  Method according to claim 3 **characterised in that** the characteristic preheat value is formed as a mean from at least one regenerator head temperature and/or furnace chamber temperature and is formed in each case at the end of a first period and/or a second period.

5.  Method according to claim 4, **characterised in that** the characteristic preheat value is formed as weighted mean from a highest and a lowest value of the regenerator head temperatures and the associated upper-furnace temperatures, in each case at the end of exhaust gas period and air period.

6. Method according to any one of claims 1 to 5, **characterised in that** a furnace chamber temperature is formed as weighted mean of a number of different temperature measurements in different places in the upper furnace and/or regenerator head.

7. Method according to any one of claims 1 to 6, **characterised in that** an extrapolation of a furnace chamber temperature to a furnace chamber temperature is carried out at the end of each and every first and the second period on the basis of a modelled time curve of a representative furnace chamber temperature.

8. Method according to any one of claims 1 to 7, **characterised in that** after a temperature drop due to the periodically alternating directing in the first control loop a first adjustable actuating variable is set in the form of a fuel flow and/or of a combustion air flow by way of an actuator assigned to the first controller and for this a supplementary addition of the same is supplied to the furnace, whereby the addition is formed from the amount of the fuel loss due to alternation and/or from a rate of temperature increase after alternated directing.

9. Method according to any one of claims 1 to 8, **characterised in that** the difference is used to evaluate a further influencing variable and/or to evaluate an uncontrolled ingress of air in the furnace chamber and/or regenerator.

10. Method according to any one of claims 1 to 9, **characterised in that** in the first control loop (I) a temperature control is combined with a molten-material cover control wherein:

    - a combined control variable (D) is determined from a furnace chamber temperature (T) as first control variable and a molten-material cover (G) as second control variable, more particularly the first and second control variables are added with opposite mathematical sign, and
    - the first controller ($R_{TG}$), more particularly a PID controller, is formed for the combined control variable (D), and also
    - a first adjustable actuating variable is set in the form of a fuel flow and/or of a combustion air flow by way of an actuator assigned to the first controller ($R_{TG}$).

11. Method according to claim 10, **characterised in that** the first and second control variables are added, weighted, with opposite mathematical sign, whereby the weights ($K_1$, $K_2$) can be set.

12. Method according to claim 10 or 11, **characterised in that** for the case that a control deviation (dT) set point minus actual value of the first control variable and a control deviation (dG) set point minus actual value of the second control variable is in each case less than zero, an adjustable auxiliary actuating variable in the form of a bubbling intensity and/or of supplementary electrical heating and/or of a briefly reduced fuel flow and/or combustion air flow is set by way of an auxiliary actuator (ADD) assigned to the first controller.

13. Method according to any one of claims 1 to 12, **characterised in that** a molten-material cover (G) is determined by means of object recognition (5.2) with image processing of an image of a melt surface, whereby

    - molten-material islands (4) are distinguished from other objects, more particularly from bubbling marks (01) and/or foam structures (02) and/or image-processing contaminants, and
    - only the area of the molten-material islands (4) is used to determine the molten-material cover.

14. Method according to claim 13, **characterised in that** the distinction between molten-material islands (4) and other objects is made using a position and/or trajectory and/or a brightness and/or a size of an object (O).

15. Regeneratively heated industrial furnace (100) with a furnace chamber, more particularly with a melting tank, more particularly for glass, having:

    - at least one fuel injector (20) for injecting fuel into the furnace chamber, which is designed for the injection of fuel, more particularly practically without combustion air,
    - a left regenerator (50) and right regenerator (50') assigned to the at least one fuel injector, which are designed for regenerative storage of heat from the exhaust gas and transfer of heat to the combustion air (VB) for the periodically alternating directing of, on the one hand, combustion air to the furnace chamber in a first period and, on the other hand, exhaust gas from the furnace chamber in a second period separately from the fuel, and
    - a control device (1000) for performing a method according to any one of claims 1 to 14, with an industrial-furnace control having:

    a temperature control module (200) for a first control loop (I) by means of which:

- by way of a furnace chamber temperature as control variable, and
- a first controller ($R_T$) for the furnace chamber temperature, and also
- by way of an actuator assigned to the first controller ($R_T$) a first adjustable actuating variable is settable in the form of a fuel flow and/or of a combustion air flow, **characterised by**

a symmetrical control module (300) relating to the left and right regenerator (50, 50') for a second control loop (II) by means of which:

- by way of a significant first characteristic preheat value ($Q_{Li}$, T) for the heat content of the combustion air of the first regenerator and a significant second characteristic preheat value ($Q_{Re}$, T) for the heat content of the combustion air of the second regenerator, whereby in each case the characteristic preheat value is given as a measure for the heat content of the combustion air, and the characteristic preheat value is formed as heat from preheated combustion air, whereby the heat from preheated combustion air is obtained from a model calculation of the regenerator (50, 50'), and
- a second controller ($R_S$) for the difference of the first and second characteristic preheat value, and also
- by way of an actuator assigned to the second controller ($R_S$) a second adjustable actuating variable in the form of a heat transfer quantity influencing the heat transfer between the first and second regenerator is settable, whereby

the second adjustable actuating variable in the form of a heat transfer quantity influencing heat transfer between the first and second regenerator is settable in such a way that the amount of the difference between the first and second characteristic preheat value is kept below a threshold value close to zero; whereby the difference between the first and second characteristic preheat value is used as control result of the second control loop to evaluate the state of the regenerator (50, 50'), and, as heat transfer quantity, a time-span ($\pm\Delta t$) is set, by which the first period is extended for the hotter of the first and second regenerator and/or the first period is shortened for the colder of the first and second regenerator, and/or, as heat transfer quantity of a time-span ($\pm\Delta$) is set, by which the second period is extended for the colder of the first and second regenerator and/or the second period is shortened for the hotter of the first and second regenerator.

**Revendications**

1. Procédé pour le fonctionnement régulé d'un four industriel à régénération (100) avec une chambre de four (10), plus particulièrement avec un bac de fusion, plus particulièrement pour du verre, comprenant les étapes :

- injection de carburant dans la chambre du four (10) par l'intermédiaire d'au moins un injecteur de carburant (20, 20') qui est conçu pour l'injection de carburant, plus particulièrement pratiquement sans air de combustion,
- guidage alterné périodiquement, d'une part d'air de combustion, vers la chambre du four (10) dans une première période ($t_1$) et d'autre part de gaz d'échappement (AG) hors de la chambre du four (10) dans une deuxième période ($t_2$), séparément du carburant au moyen d'un régénérateur gauche (50) et d'un régénérateur droit (50'), correspondant à l'au moins un injecteur de carburant (20, 20'), qui sont conçus pour l'accumulation régénérative de chaleur à partir du gaz d'échappement et la transmission de chaleur à l'air de combustion, dans lequel,

au niveau d'une première boucle de régulation (I) pour une régulation de température :

- par l'intermédiaire d'une température de chambre de for (T) en tant que grandeur de régulation,
- par l'intermédiaire d'un premier régulateur ($R_T$) pour la température de la chambre du four (T) ainsi que
- par l'intermédiaire d'un organe de réglage correspondant au premier régulateur ($R_T$), une première grandeur de réglage sous la forme d'un débit de carburant (B) et/ou d'un débit d'air de combustion (VB) est réglé, **caractérisé en ce que**

dans une deuxième boucle de régulation (II) pour une régulation symétrique concernant les régénérateurs gauche et droit (50, 50') :

- par l'intermédiaire d'une première grandeur caractéristique de préchauffage ($Q_{Li}$, T) significative de l'enthalpie de l'air de combustion (VB) du premier régénérateur (50) et d'une deuxième grandeur caractéristique de préchauffage ($Q_{Re}$, T) significative de l'enthalpie de l'air de combustion (VB) du deuxième régénérateur (50'), la grandeur caractéristique de préchauffage étant indiquée en tant que mesure pour l'enthalpie de l'air de combustion, et la grandeur caractéristique de préchauffage étant formée en tant que chaleur provenant de l'air de combustion préchauffé, la chaleur provenant de l'air de combustion préchauffée étant obtenue à partir d'un calcul du modèle du régénérateur (50, 50'),

- par l'intermédiaire d'un deuxième régulateur ($R_s$) pour la différence entre la première et la deuxième grandeur caractéristique de préchauffage ainsi que

- par l'intermédiaire d'un organe de réglage correspondant au deuxième régulateur ($R_s$), une deuxième grandeur de réglage réglable sous la forme de la grandeur de transmission de chaleur influençant la transmission de chaleur entre le premier et le deuxième régénérateur, la deuxième grandeur de réglage réglable sous la forme d'une grandeur de transmission de chaleur influençant la transmission de chaleur entre le premier et le deuxième régénérateur étant réglée de façon à ce que la différence entre la première et la deuxième grandeur caractéristique de préchauffage soit maintenue en dessous d'une valeur seuil proche de zéro ; la différence entre la première et la deuxième grandeur caractéristique de préchauffage étant utilisée comme résultat de régulation de la deuxième boucle de régulation pour l'évaluation de l'état du régénérateur (50, 50') et

en tant que grandeur de transmission de chaleur, un laps de temps ($\pm\Delta t$) est réglé, duquel, pour le plus chaud des premier et deuxième régénérateurs, la première période est prolongée et/ou, pour le plus froid des premier et deuxième régénérateurs, la première période est raccourcie et/ou, en tant que grandeur de transmission de chaleur, un laps de temps ($\pm\Delta t$) est réglé, duquel, pour le plus froid des premier et deuxième régénérateurs, la deuxième période est prolongée et/ou, pour le plus chaud des premier et deuxième régénérateurs, la deuxième période est raccourcie.

2. Procédé selon la revendication 1, **caractérisé en ce que** la différence entre la première et la deuxième grandeur caractéristique de préchauffage est une différence de quantité thermique ($\Delta Q$) correspondant aux enthalpies.

3. Procédé selon la revendication 1 ou 2, **caractérisé en ce que** la grandeur caractéristique de préchauffage est formée en outre en tant que produit d'une quantité d'air de combustion et d'une température de tête de régénérateur, la quantité d'air de combustion et/ou la température de tête de régénérateur étant mesurée et/ou la température de tête de régénérateur étant la température de tête de régénérateur la plus basse.

4. Procédé selon la revendication 3, **caractérisé en ce que** la grandeur caractéristique de préchauffage est formée comme une moyenne d'au moins une température de tête de régénérateur et/ou d'une température de chambre de four et est formée à la fin d'une première période et/ou d'une deuxième période.

5. Procédé selon la revendication 4, **caractérisé en ce que** la grandeur caractéristique de préchauffage est formée comme une moyenne pondérée d'une valeur la plus élevée et une valeur la plus basse des températures de tête de régénérateur et des températures de four supérieur correspondantes à la fin d'une période de gaz d'échappement et d'une période d'air.

6. Procédé selon l'une des revendications 1 à 5, **caractérisé en ce qu'**une température de chambre de four est formée en tant que moyenne pondérée de différentes mesures de températures à différents endroits dans le four supérieur et/ou dans la tête du régénérateur.

7. Procédé selon l'une des revendications 1 à 6, **caractérisé en ce qu'**une extrapolation d'une température de chambre de four à une température de chambre de four à la fin d'une première et de la deuxième période est effectuée sur la base d'un tracé temporel modélisé d'une température de chambre de four représentative.

8. Procédé selon l'une des revendications 1 à 7, **caractérisé en ce que**, après une chute de température provoquée par un guidage périodiquement alterné dans la première boucle de régulation, une première grandeur de réglage réglable sous la forme d'un débit de carburant et/ou d'un débit d'air de combustion est réglée par l'intermédiaire de l'organe de réglage correspondant au premier régulateur, et une augmentation supplémentaire de celle-ci est effectuée dans le four, l'augmentation étant formée de la quantité de défaut du carburant due à l'alternance et/ou d'une vitesse de l'augmentation de température après un guidage alterné.

9. Procédé selon l'une des revendications 1 à 8, **caractérisé en ce que** la différence est utilisée pour l'évaluation d'une grandeur d'influence supplémentaire et/ou pour l'évaluation d'une pénétration d'air incontrôlée dans la chambre du four et/ou le régénérateur.

10. Procédé selon l'une des revendications 1 à 9, **caractérisé en ce que**, dans la première boucle de régulation (I), une régulation de température est combinée avec une régulation de recouvrement de produit en fusion :

   - en déterminant, à partir d'une température de chambre de four (T) en tant que première grandeur de régulation et d'un recouvrement de produit en fusion (G) en tant que deuxième grandeur de régulation, une grandeur de régulation combinée (D), plus particulièrement la première et la deuxième grandeurs de réglage sont munis d'un signe opposé,
- le premier régulateur ($R_{TG}$), plus particulièrement un régulateur PID, étant conçu pour la grandeur de régulation combinée (D), et
- une première grandeur de réglage réglable sous la forme d'un débit de carburant et/ou d'un débit d'air de combustion étant réglée par l'intermédiaire de l'organe de réglage correspondant au premier régulateur ($R_{TG}$).

11. Procédé selon la revendication 10, **caractérisé en ce que** la première et la deuxième grandeur de régulation sont munis de manière pondérée d'un signe opposé, les pondérations ($K_1$, $K_2$) pouvant être réglées.

12. Procédé selon la revendication 10 ou 11, **caractérisé en ce que**, dans le cas où un écart de régulation (dT) est une valeur de consigne moins une valeur réelle de la première grandeur de régulation et un écart de régulation (dG) est une valeur de consigne moins une valeur réelle de la deuxième grandeur de régulation, inférieure à zéro, une grandeur de réglage auxiliaire réglable sous la forme d'une intensité d'effervescence et/ou d'un chauffage électrique supplémentaire et/ou d'un débit de carburant réduit à court terme et/ou d'un débit d'air de combustion est réglée par l'intermédiaire de l'organe de réglage auxiliaire (ADD) correspondant au premier régulateur.

13. Procédé selon l'une des revendications 1 à 12, **caractérisé en ce qu'**un recouvrement de produit en fusion (G) est déterminé au moyen d'une détection d'objet (5.2) lors d'un traitement de l'image d'une surface de fusion

   - les îlots de produit en fusion (4) étant différenciés des autres objets, plus particulièrement des taches d'effervescence (01) et/ou des structures de moussage (02) et/ou des impuretés du traitement d'image et
   - seule une occupation de surface par les îlots de produit en fusion (4) étant utilisée pour la détermination du recouvrement de produit en fusion.

14. Procédé selon la revendication 13, **caractérisé en ce que** la différenciation des îlots de produit en fusion (4) d'autres objets a lieu à l'aide d'une position et/ou d'une trajectoire et/ou d'une luminosité et/ou d'une taille d'un objet (O).

15. Four industriel à régénération (100) avec une chambre de four, plus particulièrement avec un bac de fusion, plus particulièrement pour du verre, comprenant :

   - au moins un injecteur de carburant (20) pour l'injection de carburant dans le four, qui est conçu pour l'injection de carburant, plus particulièrement pratiquement sans air de combustion,
   - un régénérateur gauche (50) et d'un régénérateur droit (50'), correspondant à l'au moins un injecteur de carburant (20, 20'), qui sont conçus pour l'accumulation régénérative de chaleur à partir du gaz d'échappement et la transmission de chaleur à l'air de combustion (VB), pour le guidage alterné périodiquement, d'une part d'air de combustion, vers la chambre du four dans une première période et d'autre part de gaz d'échappement hors de la chambre du four dans une deuxième période, séparément du carburant et
   - un dispositif de commande (1000) pour l'exécution d'un procédé selon l'une des revendications 1 à 14, avec une régulation de four industriel, comprenant :

      un module de régulation de température (200) pour une première boucle de régulation (I), au moyen de laquelle :

         - par l'intermédiaire d'une température de chambre de four en tant que grandeur de régulation et
         - par l'intermédiaire d'un premier régulateur ($R_T$) pour la température de chambre de four et
         - par l'intermédiaire d'un organe de réglage correspondant au premier régulateur ($R_T$), une première grandeur de réglage réglable sous la forme d'un débit de carburant et/ou d'un débit d'air de combustion peut être réglée, **caractérisé par**

   un module de régulation symétrique (300) concernant les régénérateurs gauche et droit (50, 50') pour une deuxième boucle de régulation (II), au moyen de laquelle :

      - par l'intermédiaire d'une première grandeur caractéristique de préchauffage ($Q_{Li}$, T) significative de l'enthalpie de l'air de combustion (VB) du premier régénérateur (50) et d'une deuxième grandeur caractéristique de préchauffage ($Q_{Re}$, T) significative de l'enthalpie de l'air de combustion (VB) du deuxième régénérateur (50'), la grandeur caractéristique de préchauffage étant indiquée en tant que mesure pour l'enthalpie de l'air de combustion, et la grandeur caractéristique de préchauffage étant formée en tant que chaleur provenant de l'air de combustion préchauffé, la chaleur provenant de l'air de combustion préchauffée étant obtenue à partir d'un calcul du modèle du régénérateur (50, 50'),

- un deuxième régulateur ($R_S$) pour la différence entre la première et la deuxième grandeur caractéristique de préchauffage et

- par l'intermédiaire d'un organe de réglage correspondant au deuxième régulateur ($R_s$), une deuxième grandeur de réglage réglable sous la forme de la grandeur de transmission de chaleur influençant la transmission de chaleur entre le premier et le deuxième régénérateur, la deuxième grandeur de réglage réglable sous la forme d'une grandeur de transmission de chaleur influençant la transmission de chaleur entre le premier et le deuxième régénérateur étant réglée de façon à ce que la différence entre la première et la deuxième grandeur caractéristique de préchauffage soit maintenue en dessous d'une valeur seuil proche de zéro ; la différence entre la première et la deuxième grandeur caractéristique de préchauffage étant utilisée comme résultat de régulation de la deuxième boucle de régulation pour l'évaluation de l'état du régénérateur (50, 50') et

en tant que grandeur de transmission de chaleur, un laps de temps ($\pm\Delta t$) est réglé, duquel, pour le plus froid des premier et deuxième régénérateurs, la première période est raccourcie et/ou, en tant que grandeur de transmission de chaleur, un laps de temps ($\pm\Delta t$) est réglé, duquel, pour le plus froid des premier et deuxième régénérateurs, la deuxième période est prolongée et/ou, pour le plus chaud des premier et deuxième régénérateurs, la deuxième période est raccourcie.

FIG. 1

EP 2 619 151 B1

FIG. 2

FIG. 3

FIG. 4

EP 2 619 151 B1

FIG. 5

5.3

FIG. 6

FIG. 7

FIG. 8

EP 2 619 151 B1

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1188256 A
- FR 1260888
- DD 143158 A1
- DE 3610365 A1
- WO 0248057 A1